# EUROPÄISCHE PATENTSCHRIFT

(11) **EP 1 060 925 B1**
(45) Veröffentlichungstag und Bekanntmachung des Hinweises auf die Patenterteilung: **02.05.2007**
(21) Anmeldenummer: 00112518.6
(22) Anmeldetag: 13.06.2000
(51) Int. Cl.: B60J 7/185

(54) **Verschlussvorrichtung**
Locking device
Dispositif de fermeture

(30) Priorität: 15.06.1999 DE 19927235
(43) Veröffentlichungstag der Anmeldung: 20.12.2000
(73) Patentinhaber: Webasto Vehicle Systems International GmbH, 82131 Stockdorf (DE)
(72) Erfinder: Wienchol, Otto, 82069 Hohenschäftlarn (DE)
(74) Vertreter: Wiese, Gerhard

(56) Entgegenhaltungen:
- EP-A- 0 492 006
- DE-A- 19 634 898
- US-A- 3 831 580
- US-A- 5 284 378

## Beschreibung

Die Erfindung bezieht sich auf eine Verschlussvorrichtung zur lösbaren Festlegung eines Dachteils eines Fahrzeugs an einem karosseriefesten Gegenlager gemäß dem Oberbegriff des Patentanspruchs 1.

Aus der gattungsgemäßen US 5 284 378 A ist eine Verschlussvorrichtung bekannt, bei der ein Verriegelungshaken in einer zumindest teilweise überlagerten Schwenk- und Verschiebebewegung zunächst ein Gegenlager umgreift und anschließend durch eine weitere Verschiebebewegung fest gegen dieses gezogen wird.

Eine weitere bekannte Verschlussvorrichtung dieser Art (DE 297 03 603 U1) dient der lösbaren Festlegung eines Cabriolet-Verdecks an einem Karosserierahmenteil. Die Verschlussvorrichtung umfasst einen um eine im Wesentlichen horizontal und parallel zur Fahrzeuglängsachse verlaufende Achse schwenkbaren Fanghaken, welcher mit einem Gegenlager zusammenwirkt. Beim Verschwenken des Fanghakens greift eine Nut desselben in einen U-förmigen Schenkel des Gegenlagers, zieht diesen im Wesentlichen in Schwenkrichtung in ein trichterförmiges Aufnahmeorgan und verriegelt ihn in einer Endlage.

Aus der DE 196 34 898 A1 ist eine Vorrichtung zum Verschließen und Zuziehen sowie zum Öffnen einer Heckraumklappe einer Kraftfahrzeugkarosserie bekannt, die ein Heckklappenschloss im Bereich einer der Heckraumklappe zugeordneten Ladekante und ein an der Heckklappe angeordnetes Schließelement als Gegenlager umfasst. Das Heckklappenschloss weist ein Schlossblech, eine vorrastfreie Drehfalle, eine mit einem Öffnungshebel freigebbare Sperrklinke zur Arretierung der Drehfalle sowie eine Zuziehschwinge mit elektromechanischem Zuziehantrieb auf. Beim Schließen der Heckraumklappe wird das Schließelement in eine U-förmige Nut der Drehfalle eingeführt und unter Verschwenken der Drehfalle und der Zuziehschwinge in ein nach oben offenes Einführungsmaul des Heckklappenschlosses bewegt, wobei die Drehfalle und die Zuziehschwinge auf dem Schlossblech achsgleich gelagert sind.

In der EP 0 492 006 A1 ist eine Vorrichtung zum Niederholen eines freien Endes eines Fahrzeugverdecks auf einen Rahmen eines Fahrzeugs aus einer Stellung, in der sich das Fahrzeugverdeck kurz vor der geschlossenen Stellung und das freie Ende oberhalb dieser befindet, und zum Halten des vorderen Endes des Fahrzeugverdecks in niedergeholter Stellung beschrieben. Die Vorrichtung hat am freien Ende des Fahrzeugverdecks mindestens ein Eingriffselement als Gegenlager für den Eingriff eines am Rahmen vorgesehenen Niederholhakens, der eine Angriffskurve zum gleitenden Eingriff mit dem Eingriffselement aufweist und der mit einer Betätigungsstange einer Antriebseinrichtung über einen in Eingriff mit einem länglichen Aufnahmeschlitz stehenden Schwenkzapfen schwenkbar gekoppelt und von der Antriebseinrichtung zwischen einer angehobenen Eingriffsstellung und einer abgesenkten Verriegelungsstellung bewegbar ist. Der Aufnahmeschlitz für den Schwenkzapfen ist am Rahmen ausgebildet. Der Niederholhaken seinerseits weist einen länglichen Führungsschlitz auf, mit dem ein am Rahmen befestigter Führungszapfen in Eingriff steht, um den der Niederholhaken bei Bewegung in die Verriegelungsstellung unter Verlagerung des Führungszapfens entlang dem Führungsschlitz schwenkbar ist, wobei der Niederholhaken zunächst im wesentlichen eine Schwenkbewegung in Bewegungsrichtung des Eingriffselements ausführt, der kurz vor Erreichen der Verriegelungsstellung eine Verschiebebewegung im wesentlichen senkrecht zur Bewegungsrichtung des Eingriffselements überlagert ist.

Der im Anspruch 1 angegebenen Erfindung liegt die Aufgabe zugrunde, eine Verschlussvorrichtung der eingangs genannten Art zu schaffen, die bereits unmittelbar oder nahezu unmittelbar nach dem Einführen des Gegenlagers in das Aufnahmeorgan eine große Haltekraft bereitstellt und sich durch große Funktionssicherheit auszeichnet.

Diese Aufgabe wird durch eine Verschlussvorrichtung mit den Merkmalen des Anspruchs 1 gelöst. Dadurch, dass der Verriegelungshaken im Wesentlichen in Verschieberichtung des Gegenlagers von einer vorderen in eine hintere Rastposition verschiebbar sowie im Wesentlichen senkrecht hierzu von einer Verriegelungs- in eine Freigabestellung schwenkbar ist, wird eine Funktionstrennung zwischen der Verriegelungsbewegung als Schwenkbewegung und der Verschiebebewegung geschaffen, wobei das Gegenlager auch in der vorderen Rastposition sicher in dem Aufnahmeorgan gehalten wird. Die Schwenkbewegung des Verriegelungshakens im wesentlichen senkrecht zur Richtung der Verschiebebewegung, die das Gegenlager relativ zum Aufnahmeorgan ausführt, verhindert, dass der Verriegelungshaken durch vom

Gegenlager in Verschieberichtung aufgebrachte Kräfte in seine Freigabestellung geschwenkt wird und bewirkt somit eine Selbsthemmung.

Vorteilhafte Weiterbildungen der Erfindung sind Gegenstand der Unteransprüche.

So läßt sich die Funktionssicherheit dadurch steigern, dass der Verriegelungshaken in Richtung auf die Verriegelungsstellung federnd vorgespannt ist.

Die Schwenkbewegung des Verriegelungshakens wird vorzugsweise mittels eines mit einer Steuerbahn einer Schaltkulisse zusammenwirkenden Steuerhebels gesteuert, mittels dem der Verriegelungshaken von der Verriegelungsstellung in die Freigabestellung schwenkbar ist. Wird der Steuerhebel mit Bezug auf den Verriegelungshaken bewegbar ausgebildet, wobei der Steuerhebel in Richtung auf die Verriegelungsstellung entgegen einer Federkraft außer Eingriff mit Bezug auf den Verriegelungshaken bringbar ist, so kann der Verriegelungshaken unabhängig von der Position, die dem Steuerhebel von der Steuerbahn vorgegeben wird, in die Freigabestellung angehoben werden. Dies ist insbesondere dann sinnvoll, wenn der Verriegelungshaken in der vorderen Rastposition als Grundstellung seine Verriegelungsstellung einnimmt und beim Festlegen des Dachteils an dem Gegenlager durch dieses zunächst in die Freigabestellung geschwenkt wird, um dann, wenn das Gegenlager eine vorbestimmte Position innerhalb des Aufnahmeorgans einnimmt, in seine Verriegelungsstellung zu schwenken.

In weiterer Ausgestaltung der Erfindung wird der Verriegelungshaken mittels eines mit einer Steuerbahn einer Schaltkulisse in Eingriff stehenden Lagerhebels zwischen der vorderen und der hinteren Rastposition verschoben. Vorzugsweise umfasst der Lagerhebel wenigstens zwei Arme, von denen der eine schwenkbar mit der Lagerplatte verbunden ist und der andere mit der Steuerbahn der Schaltkulisse in Eingriff steht, wobei der Verriegelungshaken schwenkbar mit dem Lagerhebel gekoppelt ist. Der Verriegelungshaken und der fakultativ vorgesehene Steuerhebel können achsgleich in dem Lagerhebel gelagert sein.

Die Verschlussvorrichtung kann so ausgebildet sein, dass der Verriegelungshaken in seiner Freigabestellung - und zwar vorzugsweise in der vorderen Rastposition - mittels eines Haltehebels arretierbar ist. Dabei läßt sich ein konstruktiv einfacher Aufbau realisieren, wenn der Haltehebel schwenkbar mit dem Verriegelungshaken gekoppelt ist und wenigstens zwei Arme aufweist, von denen ein erster mit einer an der Lagerplatte festgelegten oder einstückig mit dieser ausgebildeten Fangvorrichtung in der Freigabestellung des Verriegelungshakens formschlüssig in Eingriff bringbar ist, wobei der Haltehebel in Richtung auf die Fangvorrichtung federnd vorgespannt ist, und ein zweiter Arm in das Aufnahmeorgan eingreift und mittels des Gegenlagers entgegen der Federvorspannung schwenkbar ist. Erreicht das Gegenlager eine vorbestimmte Position innerhalb des Aufnahmeorgans, wird somit der Haltehebel außer Eingriff mit Bezug auf die Fangvorrichtung gebracht. Der Aufbau der Verschlussvorrichtung lässt sich weiter vereinfachen, wenn der erste Arm des Haltehebels eine Schrägfläche aufweist, die bei außer Eingriff mit Bezug auf die Fangvorrichtung befindlichem Haltehebel federnd vorgespannt an eine Gegenfläche der Fangvorrichtung anlegbar und mit Bezug auf diese verschiebbar ist, wobei die Schrägfläche dergestalt mit der Gegenfläche zusammenwirkt, dass die Federvorspannung die Vorspannung des Verriegelungshakens in Richtung auf seine Verriegelungsstellung bewirkt.

Die Funktionssicherheit der Verschlussvorrichtung lässt sich dadurch erhöhen, dass wenigstens in der hinteren Rastposition des Verriegelungshakens dessen Schwenkbewegung in der Verriegelungsstellung blockierbar ist, wobei zur Blockierung der Schwenkbewegung des Verriegelungshakens vorzugsweise ein Arm des Haltehebels mit dem Steuerhebel in Eingriff bringbar ist und diesen mit Bezug auf den Verrieglungshaken festlegt, so dass über die Steuerbahn, mit der der Steuerhebel seinerseits zusammenwirkt, die Schwenkposition des Verriegelungshakens festgelegt ist.

Eine kompakte Gestaltung der Verschlussvorrichtung lässt sich erzielen, wenn die die Schwenk- und die Verschiebebewegung des Verriegelungshakens steuernden Schaltkulissen in einem gemeinsamen Kulissenkörper integriert sind. In bevorzugter Ausgestaltung ist der Kulissenkörper mit Bezug auf die Lagerplatte zwischen einer hinteren und einer vorderen Endlage verschiebbar, wobei die Steuerbahnen dergestalt ausgebildet sind, dass sich der Verriegelungshaken in der hinteren Endlage des Kulissenkörpers in seiner vorderen Rastposition befindet und zwischen seiner Verriegelungs- und Freigabestellung schwenkbar ist, und der Verriegelungshaken in der vorderen Endlage des Kulissenkörpers seine hintere Rastposition in Verriegelungsstellung einnimmt.

Die Verschlussvorrichtung kann ferner eine Gegenlagererkennungseinrichtung umfassen, die dergestalt ausgebildet ist, dass bei Außersolllage des Gegenlagers eine Verschiebebewegung des Kulissenkörpers nur zwischen der hinteren Endlage und einer hinter der vorderen Endlage angeordneten Warnposition möglich ist. Auf diese Weise wird gewährleistet, dass der Kulissenkörper seine vordere Endlage nur dann einnehmen kann, wenn sich das Gegenlager in einer Position befindet, in der es sicher in das Aufnahmeorgan eingeführt werden kann. Ist dies nicht der Fall, wird die Bewegung des Kulissenkörpers vor Erreichen seiner vorderen Endlage mechanisch blockiert. Vorzugsweise umfasst die Gegenlagererkennungseinrichtung einen schwenkbar mit der Lagerplatte gekoppelten Sperrhebel, der bei Erreichen der Warnposition des Kulissenkörpers an einer Anlaufkante desselben federnd vorgespannt anliegt, sofern das Gegenlager in Außersolllage steht, und der außer Eingriff mit Bezug auf die Anlaufkante steht, sofern sich das Gegenlager in Solllage befindet.

Während die Position des Gegenlagers in Richtung seiner Verschiebung im Aufnahmeorgan gesehen durch das Zusammenwirken von Aufnahmeorgan und Verriegelungshaken festlegbar ist, kann wenigstens ein Ausrichtorgan vorgesehen sein, welches ausgelegt ist, die Verschlussvorrichtung mit Bezug auf das Gegenlager im Wesentlichen senkrecht mit Bezug auf die Verschieberichtung des Gegenlagers relativ zum Aufnahmeorgan auszurichten.

Der Kulissenkörper wird bevorzugt motorisch verschoben, wozu in weiterer Ausgestaltung der Erfindung an der Lagerplatte ein Führungsschienenabschnitt festgelegt ist, der einen motorisch bewegbaren Mitnahmegleiter verschiebbar aufnimmt, der mit dem Kulissenkörper in Eingriff bringbar ist und dessen Verschiebebewegung bewirkt.

Handelt es sich bei dem Dachteil des Fahrzeugs um einen Teil eines Falt- oder Lamellendachs, so ist der Führungsschienenabschnitt bei Festlegung der Verschlussvorrichtung an dem Gegenlager vorzugsweise an einen vorderen Führungsschienenabschitt anlegbar, der in einem Seitenholm des Fahrzeugs aufgenommen ist, wobei der Führungsschienenabschnitt und der vordere Führungsschienenabschnitt eine Führungsschiene des Falt- oder Lamellendachs bilden. Der vordere Führungsschienenabschnitt ist bevorzugt schwimmend in dem Seitenholm gelagert, wobei der Führungsschienenabschnitt ein Ausrichtorgan aufnehmen kann, das mit dem vorderen Führungsschienenabschnitt in Eingriff bringbar ist, um den Führungsschienabschnitt und den vorderen Führungsschienenabschitt gegeneinander auszurichten und insbesondere einer Verkippung um eine in Richtung der Führungsschienen verlaufenden Achse entgegenzuwirken. Das Dachteil ist vorzugsweise symmetrisch zu einer in Öffnungs- bzw. Schließrichtung des Falt - oder Lamellendachs verlaufenden Symmetrieachse aufgebaut und umfasst insgesamt zwei Verriegelungsvorrichtungen, die zu beiden Seiten der Symmetrieachse nahe der äußeren seitlichen Begrenzung des Dachteils angeordnet sind.

Insbesondere wenn die Seitenholme lösbar mit dem Fahrzeug verbunden sind, kann die Gegenlagererkennungseinrichtung auch so ausgebildet sein, dass sie mit dem Seitenholm dergestalt wechselwirkt, dass bei nicht in Solllage befindlichem oder nicht vorhandenem Seitenholm der Verriegelungshaken nicht bis in seine hintere Rastposition verschoben werden kann, und zwar insbesondere auch dann, wenn sich das Gegenlager in Solllage mit Bezug auf die Verschlusseinrichtung befindet. Zur Blockierung des Verriegelungshakens vor Erreichen seiner hinteren Endlage kann dem Kulissenkörper der Verschlussvorrichtung eine Verschiebung nur zwischen seiner hinteren Endlage und seiner Warnposition ermöglicht werden, wozu vorzugsweise ein schwenkbar mit der Lagerplatte gekoppelter Sperrhebel eingesetzt wird, der bei Erreichen der Warnposition des Kulissenkörpers an einer Anlaufkante desselben federn vorgespannt anliegt, sofern der Seitenholm in Außersolllage steht, und der außer Eingriff mit Bezug auf die Anlaufkante steht, sofern sich der Seitenholm in Solllage befindet.

Wird ein in dem Kulissenkörper verschiebbar aufgenommener Riegelstein vorgesehen, der zwischen der hinteren Endlage und vorderen Endlage des Kulissenkörpers letzteren formschlüssig mit dem Mitnahmegleiter verbindet, wobei der Riegelstein in der vorderen Endlage des Kulissenkörpers in Eingriff mit der Lagerplatte oder dem Führungsschienenabschnitt und außer Eingriff mit Bezug auf den Mitnahmegleiter bringbar ist, wobei letzterer weiter nach vorne in eine Übergabeposition verschiebbar ist, genügt ein einzelnes drucksteifes Kabel je Verschlussvorrichtung bzw. Führungsschiene, um sowohl die Verschiebebewegung des Kulissenkörpers als auch die Öffnungs- und Schließbewegung des Falt- oder Lamellendachs zu betätigen. Dabei ist der Führungsschienenabschnitt bevorzugt ausgelegt, einen Dachspitzengleiter verschiebbar aufzunehmen, der mit einem vorderen Ende des Falt- oder Lamellendachs verbunden ist und dessen Öffnungs- und Schließbewegung bewirkt, wobei der Dachspitzengleiter ebenfalls einen Riegelstein verschiebbar aufnimmt, der in Eingriff mit der Lagerplatte oder dem Führungsschienenabschnitt steht und den Dachspitzengleiter in einer Halteposition hält, sofern sich der Mitnahmegleiter hinter seiner Übergabeposition befindet, und der in der Übergabeposition des Mitnahmegleiters formschlüssig mit diesem verbindbar und außer Eingriff mit Bezug auf die Lagerplatte oder den Führungsschienenabschnitt bringbar ist. Auf diese Weise können sämtliche verschiebbaren Teile des Falt- oder Lamellendachs in der Dachkassette aufgenommen und mit dieser von dem karosseriefesten Gegenlager gelöst werden.

Der motorisch bewegbare Mitnahmegleiter wird bevorzugt über eine elektronische Steuervorrichtung gesteuert, in die insbesondere die Signale "Dachspitzengleiter in Halteposition" und/oder "Verriegelungshaken in Verriegelungsstellung" als Eingangsgrößen eingehen, wobei diese Signale über elektrische Schalter geliefert werden.

Nachfolgend sind vorteilhafte Ausführungsformen der Erfindung anhand der Zeichnungen näher erläutert.

Es zeigt:
- Fig. 1: eine perspektivische Darstellung eines Fahrzeugs mit einem als Dachkassette ausgebildeten Dachteil, welches Teil eines Faltdachs ist und mittels einer Verschlussvorrichtung an einem an einer B-Säule des Fahrzeugs befestigten Gegenlager festgelegt ist, wobei das Faltdach sich in seiner geöffneten Position befindet;
- Fig. 2: eine perspektivische Darstellung ähnlich der Fig. 1, wobei die Dachkassette mitsamt den verschiebbaren Teilen des Faltdachs in eine Ablageposition abgesenkt ist;
- Fig. 3: eine perspektivische Darstellung der Verschlussvorrichtung, wobei sich ein Verriegelungshaken derselben in seiner hinteren Rastposition in Verriegelungsstellung befindet;
- Fig. 4: eine Explosionsdarstellung der Verschlussvorrichtung der Fig. 3;
- Fig. 5: eine Seitenansicht in Richtung auf eine Lagerplatte der Verschlussvorrichtung der Fig. 3;
- Fig. 6: eine Seitenansicht in Richtung auf eine Führungsschiene der Verschlussvorrichtung der Fig. 3;
- Fig. 7: einen schematischen Teilschnitt entlang der Linie VII-VII der Fig. 3, der in Prinzipdarstellung die Riegelsteinankopplungen eines motorisch verschiebbaren Mitnahmegleiters an einen die Bewegung des Verriegelungshakens der Verschlussvorrichtung steuernden Kulissenkörper sowie an einen Dachspitzengleiter des Faltdachs veranschaulicht;
- Fig. 8: eine perspektivische Darstellung einer abgewandelten Ausführungsform einer Verschlussvorrichtung, wobei sich ein Verriegelungshaken derselben in seiner hinteren Rastposition in Verriegelungsstellung befindet

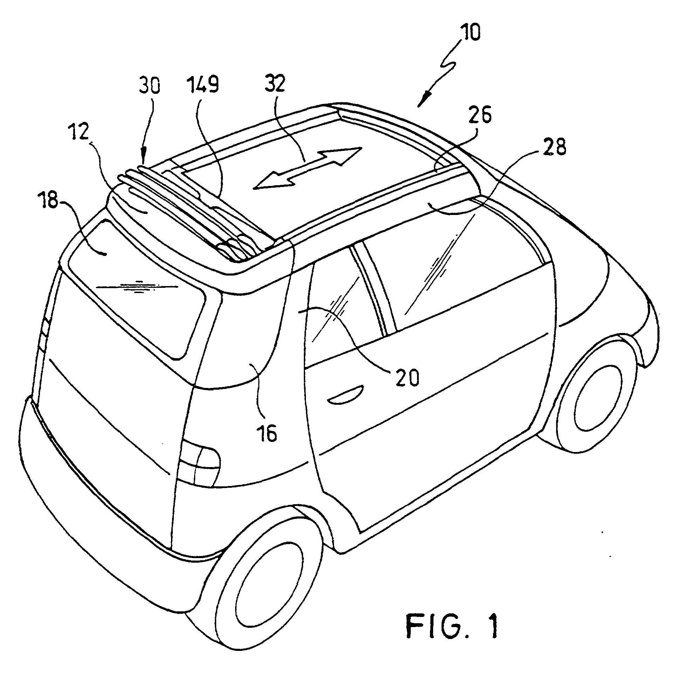

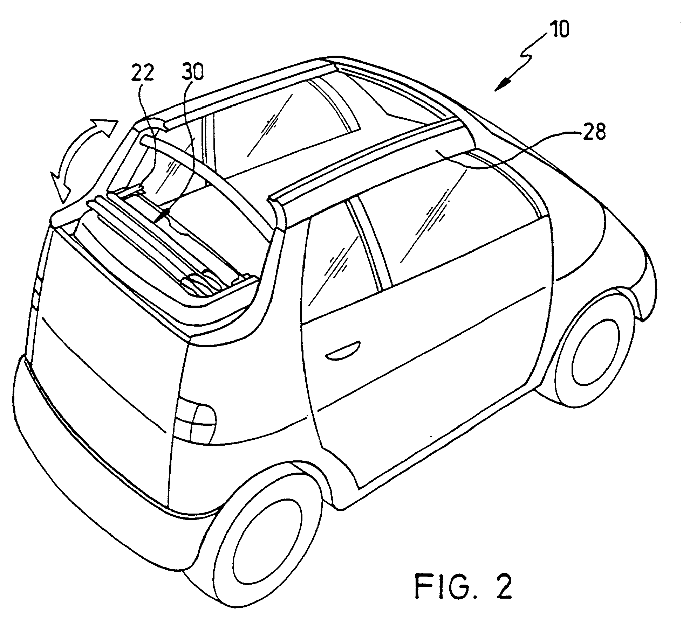

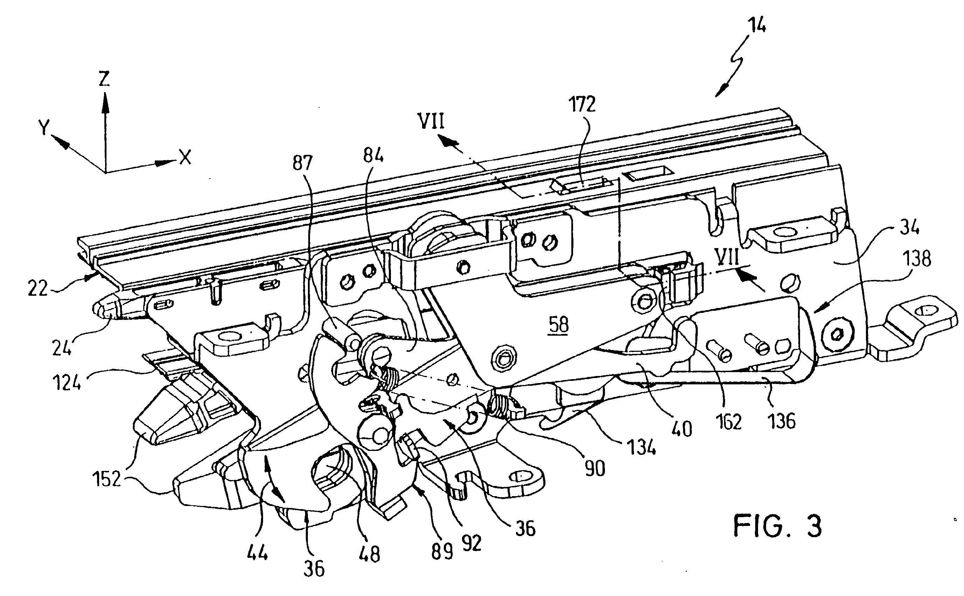

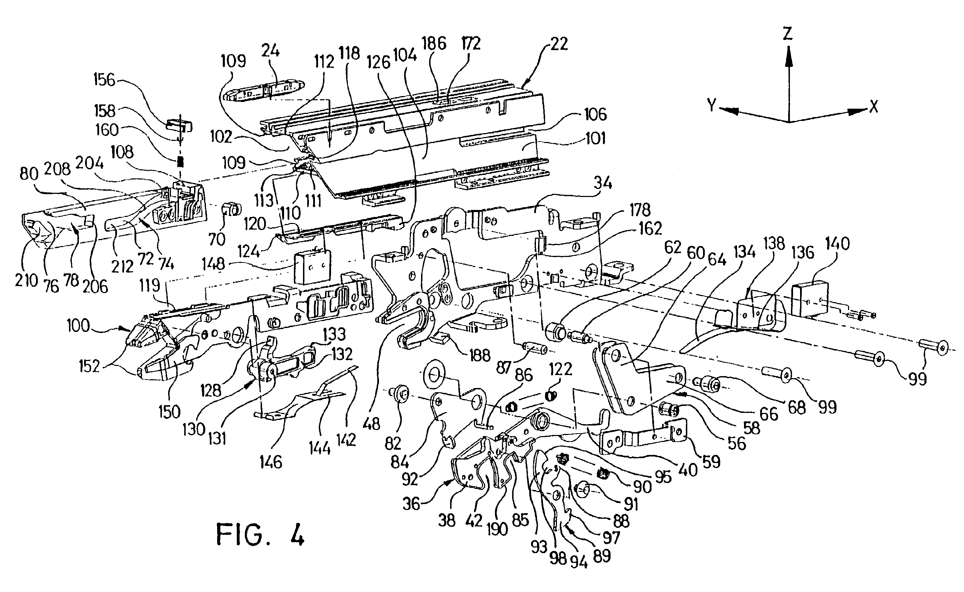

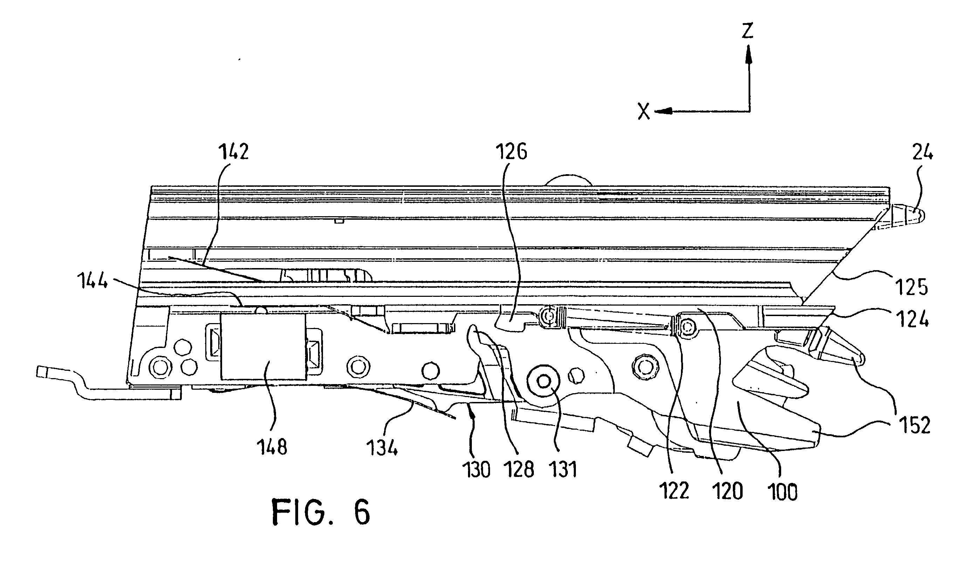

In den Fign. 1 und 2 ist ein Fahrzeug 10 mit einem Faltdach 30 gezeigt, welches in Öffnungs- bzw. Schließrichtung 32 verschiebbar in Führungsschienen aufgenommen ist, von denen ein vorderer Führungsschienenabschnitt 26 schwimmend in mit dem Fahrzeug 10 lösbar verbundenen Seitenholmen 28 aufgenommen ist. Das Faltdach 30 ist nach hinten in Öffnungsrichtung 32 soweit verschiebbar, dass seine Dachspitze 149 im Wesentlichen bündig mit einer Vorderkante einer Dachkassette 12 abschließt und sämtliche verschiebbaren Teile des Faltdachs 30 in einem Führungsschienenabschnitt 22 einer Verschlussvorrichtung aufgenommen sind, von der eine erste, insgesamt mit 14 bezeichnete Ausführungsform in den Fign. 3 bis 7 veranschaulicht ist. Die Dachkassette 12 stellt ein an einem karosseriefesten Gegenlager des Fahrzeugs 10 mittels der Verschlussvorrichtung 14 festlegbares Dachteil dar, welches über ein nicht dargestelltes Viergelenk gelenkig mit der Fahrzeugkaosserie verbunden und bei geöffneter Verschlussvorrichtung 14 über das Viergelenk mitsamt faltbarer Seitenteile 16 und einem eine Kunststoff-Heckscheibe 18 umfassenden faltbaren Heckteil absenkbar ist. In abgesenkter Position der Dachkassette 12 kann die Verschlussvorrichtung 14 an einem am Viergelenk angebrachten weiteren Gegenlager festgelegt werden, um die Dachkassette in dieser Position zu halten. An der Dachkassette 12 sind zwei spiegelbildlich ausgeführte Verschlussvorrichtungen angebracht, wobei nur die in Fahrtrichtung gesehen linke Verschlussvorrichtung 14 wiedergegeben ist, sich aber alle Ausführungen sinngemäß auch auf die spiegelbildliche rechte Verschlussvorrichtung beziehen. Es sei ferner angemerkt, dass die in Fig. 3 bis 7 mit X bezeichnete Achse in Öffnungsrichtung des Faltdachs 30, d.h., in die gleiche Richtung wie der auf das Fahrzeugheck gerichtete Pfeil 32 in Fig. 1 weist.

Die beiden Verschlussvorrichtungen 14 sind symmetrisch zu einer in Fahrzeuglängsrichtung verlaufenden Symmetrieachse im Inneren der Dachkassette 12 nahe ihrer seitlichen Außenflächen dergestalt montiert, dass sie an den an den B-Säulen 20 angebrachten karosseriefesten Gegenlagern festgelegt werden können, wobei gleichzeitig die Führungsschienenabschnitte 22 der Verschlussvorrichtungen 14 mit den vorderen Führungsschienenabschnitten 26 der Seitenholme 28 fluchtend ausgerichtet werden, indem eine am Führungsschienenabschnitt 22 festgelegte Ausrichtleiste 24 als Ausrichtorgan in Eingriff mit den vorderen Führungsschienenabschnitten 26 gebracht wird.

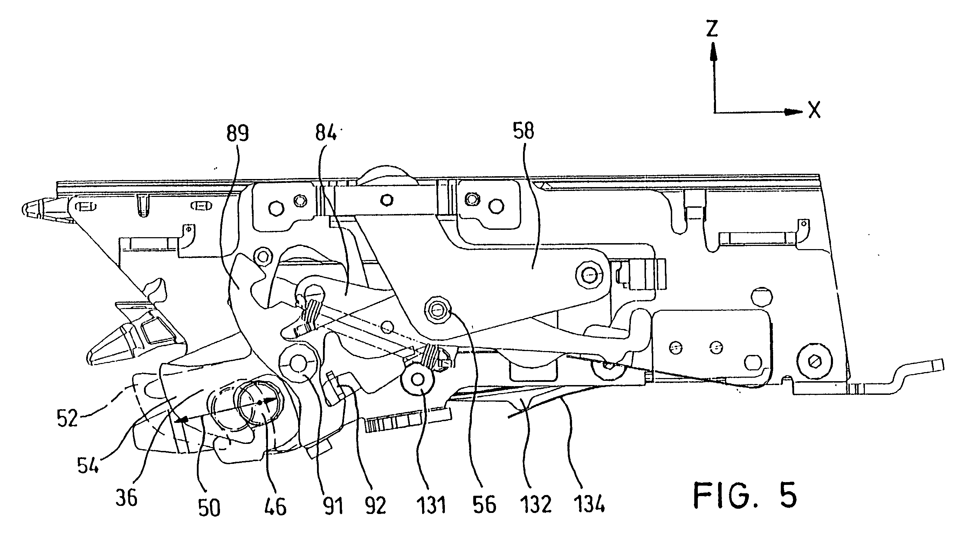

Die Verschlussvorrichtung 14 umfasst eine Lagerplatte 34 mit einem als Aufnahmenut 48 ausgebildeten Aufnahmeorgan, in welches ein Bolzen 46 des an der B-Säule 20 angebrachten Gegenlagers in Verschieberichtung 50 (vgl. Fig. 5) eingeführt und mittels einer Verriegelungsnut 42 eines Verriegelungshakens 36 verriegelt werden kann. Dabei ist die Verriegelungsnut 42 in einem vorderen Arm 38 des Verriegelungshakens 36 plaziert, der über einen Lagerstift 56 schwenkbar in einem geknickten Lagerhebel 58 aufgenommen ist. Der Lagerstift 56 des Verriegelungshakens 36 ist etwa mittig zwischen dem die Verriegelungsnut 42 umfassenden vorderen Arm 38 und einem hinteren Arm 40 angeordnet, wobei der Verriegelungshaken 36 um die Achse des Lagerstifts 56 in Schwenkrichtung 44 (siehe Fig. 3) zwischen einer in den Fign. 3, 5 und 6 dargestellten Verriegelungs- und einer Freigabestellung schwenkbar ist. In Verriegelungsstellung ist der Verriegelungshaken 36 ferner zwischen einer in Fig. 5 in unterbrochenen Linien wiedergegebenen vorderen Rastposition 52 und einer hinteren Rastposition 54 in Verschieberichtung 50 verschiebbar.

Der Lagerhebel 58 ist zweiteilig ausgebildet und umfasst zwei in Y-Richtung um die Dicke einer Buchse 62 beabstandete deckungsgleiche Hälften, deren Abstand so bemessen ist, dass der Verriegelungshaken 36 sowie ein weiter unten beschriebener Steuerhebel 84 zwischen ihnen aufgenommen werden kann. Die Buchse 62 ist auf eine Achse 60 aufgeschoben, die einen Arm 64 des Lagerhebels 58 dergestalt in Y-Richtung durchsetzt, dass sie die Hälften des Lagerhebels 58 beidseitig überragt und zum einen in der Lagerplatte 34 und zum anderen in einem den Arm 64 umgreifenden Lagerbügel 59 gehalten ist, welcher seinerseits an der Lagerplatte 34 festgelegt ist. Der Lagerhebel 58 ist mittels eines an seinem zweiten Arm 66 festgelegten Steuerstifts 68 um die Achse 60 schwenkbar, wobei der Steuerstift 68 den Lagerhebel in Y-Richtung überragt und in eine Steuerbahn 72 einer Schaltkulisse 74 eingreift, in der er über einen Gleitstein 70 geführt ist.

Die Schaltkulisse 74 ist in einem Kulissenkörper 80 integriert, der eine zweite Schaltkulisse 78 aufweist, in deren Steuerbahn 76 ein an dem Steuerhebel 84 festgelegter Steuerbolzen 82 verschiebbar aufgenommen ist und dessen Schwenkbewegung um die Achse des Lagerstifts 56 bewirkt, mittels dem der Steuerhebel 84 gemeinsam mit dem Verriegelungshaken 36 in dem Lagerhebel 58 gelagert ist, wobei sich der Steuerhebel in Richtung auf den vorderen Arm 38 des Verriegelungshakens 36 erstreckt. Eine Abkantung 92 des Steuerhebels 84 greift in eine in -Z-Richtung offene Ausnehmung 85 des Verriegelungshakens 36 ein und dient der Mitnahme des Verriegelungshakens 36, wenn der Steuerhebel 84 über seinen Steuerbolzen 82 von der Steuerbahn 76 im Uhrzeigersinn geschwenkt wird (die vorliegend verwendeten Begriffe Uhrzeigersinn und Gegenuhrzeigersinn beziehen sich jeweils auf eine Betrachtung in Y-Richtung).

Ein Haltehebel 89 ist etwa mittig durch einen Ansatzbolzen 91 schwenkbar auf dem Verriegelungshaken 36 im Bereich zwischen der Ausnehmung 85 und der Verriegelungsnut 42 gelagert, wobei eine Zugfeder 90 zwischen einem an einem ersten Arm 93 des Haltehebels 89 befindlichen Vorsprung 88 und einer Abkantung 86 des Steuerhebels 84 vorgesehen ist. Mittels der Zugfeder 90 wird dem Steuerhebel 84 eine Vorspannung im Uhrzeigersinn dergestalt aufgeprägt, dass die Abkantung 92 des Steuerhebels 84 spielfrei in der Ausnehmung 85 des Verriegelungshakens 36 anliegt, wobei gleichzeitig der Haltehebel 89 ebenfalls im Uhrzeigersinn geschwenkt wird und dieser mittels einer an seinem ersten Arm 93 vorgesehenen Schrägfläche 95 vorgespannt an einem sich in -Y-Richtung erstreckenden, an der Lagerplatte 34 festgelegten Haltebolzen 87 anliegt, sofern sich der Verriegelungshaken 36 außerhalb seiner Freigabestellung befindet. Die im ersten Arm 93 des Haltehebels 89 oberhalb eines im wesentlichen in X-Richtung geöffneten Rastbereichs 98 angeordnete Schrägfläche 95 ist so ausgebildet, dass über die vorgespannte Anlage der Schrägfläche 95 an dem Haltebolzen 87 eine Kraft auf den Verriegelungshaken 36 ausgeübt wird, die letzteren im Gegenuhrzeigersinn um die Achse des Lagerstifts 56 dreht, und der Verriegelungshaken 36 über eine sich in Längsrichtung des Fahrzeugs 10 gesehen hinter der Verriegelungsnut 42 liegende (d.h., ausgehend von der Verriegelungsnut 42 in positiver X-Richtung versetzt angeordnete), in Verschieberichtung 50 verlaufende Gleitfläche 190 auf einer Abkantung 188 der Lagerplatte 34 aufliegt. Der Haltebolzen 87 dient ferner als Fangvorrichtung, in die der Rastbereich 98 des Haltehebels 89 eingreift, wenn der Verriegelungshaken 36 sich in seiner Freigabestellung befindet.

Ein zweiter Arm 94 des Haltehebels 89, der sich unterhalb des Ansatzbolzens 91 (d.h., mit Bezug auf diesen in negativer Z-Richtung versetzt) befindet, weist einen im wesentlichen in X-Richtung überstehenden Vorsprung 97 auf, der, um den Steuerhebel 84 mit Bezug auf den Verriegelungshaken 36 festzulegen, an eine Unterseite der Abkantung 92 des Steuerhebels 84 anlegbar ist, sobald sich der Verriegelungshaken 36 seiner hinteren Rastposition 54 nähert.

Eine insgesamt mit 100 bezeichnete, sich im wesentlichen in X-Richtung erstreckende Ausrichtplatte ist mit der Lagerplatte 34 über mehrere Schrauben 99 verbunden, die gleichzeitig einen unteren Bereich des Führungsschienenabschnitts 22 durchsetzen, der überdies über nicht dargestellte Blindniete in seinem oberen Bereich direkt an der Lagerplatte 34 festgelegt ist, wobei ein fester Zusammenhalt von Lagerplatte 34, Führungsschienenabschnitt 22 und Ausrichtplatte 100 erzielt wird. Der Führungsschienenabschnitt 22 weist eine untere und eine obere Gleitbahn 101 bzw. 102 auf, die durch eine in der X-Z-Ebene verlaufende Trennwand 104 voneinander getrennt sind. Die untere Gleitbahn 101 ist seitlich von der Trennwand 104 und einer Rückwand der Lagerplatte 34 sowie nach oben und unten durch Schenkel, die sich ausgehend von der Trennwand 104 in -Y-Richtung erstrecken, begrenzt und in +/-X-Richtung offen. Sie dient der in +/-X-Richtung verschieblichen Aufnahme des Kulissenkörpers 80, der seinerseits eine in Y-Richtung überstehende Anlaufkante 108 aufweist, die durch einen Durchbruch 106 in der Trennwand 104 in den Bereich der Gleitbahn 102 hineinreicht. Dabei ist der Kulissenkörper 80 in +/-X-Richtung zwischen einer hinteren und einer vorderen Endlage verschiebbar.

Die Gleitbahn 102 ist nach oben und unten durch sich in Y-Richtung erstreckende Schenkel 112 bzw. 110 begrenzt und mittels senkrecht auf den Schenkeln 110 und 112 angeordneter Stege 109 in wenigstens zwei offene Kammern 111, 113 unterteilt, von denen die innere Kammer 111 der Aufnahme eines Mitnahmegleiters 114 und die äußere Kammer 113 der Aufnahme eines Dachspitzengleiters 116 dient. Beide Gleiter 114 und 116 sind in +/-X-Richtung verschiebbar, wobei am Mitnahmegleiter 114 ein drucksteifes Kabel 174 angebracht ist, welches über einen nicht gezeigten, an der Dachkassette 12 festgelegten Motor bewegbar ist und in einem Kabelkanal 118 geführt wird, der seitlich neben der Gleitbahn 102 in der Trennwand 104 aufgenommen ist.

Zwischen einer Oberseite 119 der Ausrichtplatte 100 und einer Unterseite des Schenkels 110 ist ein in +/-X-Richtung verschiebbarer Tastgleiter 120 als Teil einer Gegenlagererkennungseinrichtung aufgenommen, der durch Wirkung einer zwischen dem Tastgleiter 120 und der Ausrichtplatte 100 angebrachten Zugfeder 122 in -X-Richtung dergestalt vorgespannt wird, dass seine Tastspitze 124 eine Vorderkante 125 des Führungsschienenabschnitts 22 überragt. An dem der Tastspitze 124 in X-Richtung gesehen gegenüberliegenden Ende des Tastgleiters 120 ist ein Ausrücker 126 angeordnet, der mit einem Ausrückarm 128 eines geknickten Sperrhebels 130 wechselwirkt, der seinerseits um eine Achse 131 schwenkbar zwischen der Lagerplatte 34 und der Ausrichtplatte 100 gelagert ist. An einem sich im Wesentlichen senkrecht zu dem Ausrückarm 128 erstreckenden Arm 132 des Sperrhebels 130 ist eine Sperrnase 133 vorgesehen, die ausgelegt ist, in eine komplementär geformte, nicht dargestellte Anlaufkante an der Unterseite des Kulissenkörpers 80 einzugreifen, wenn sich der Kulissenkörper 80 in einer hinter seiner vorderen Endlage befindlichen Warnposition aufhält. Dabei ist die Warnposition des Kulissenkörpers 80 mit Bezug auf die Lagerplatte 34 an einer Stelle angeordnet, die sich zwischen der vorderen und der hinteren Endlage des Kulissenkörpers 80 befindet, wobei die vordere Endlage einer kleineren X-Koordinate entspricht als die hintere Endlage.

Der Sperrhebel 130 wird mittels eines Federarms 134 einer zwei Federarme 134 und 136 umfassenden Kombifeder 138 im Gegenuhrzeigersinn belastet, so dass die Sperrnase 133 bei sich in Warnposition befindlichem Kulissenkörper 80 vorgespannt an dessen Anlaufkante anliegt und verhindert, dass der Kulissenkörper 80 seine vordere Endlage erreicht, falls sich das Gegenlager nicht in seiner Solllage mit Bezug auf die Verschlussvorrichtung 14 befindet. Der Kulissenkörper ist in diesem Fall nur zwischen seiner hinteren Endlage und seiner Warnposition verschiebbar. Wird hingegen beim Ankopplungsvorgang der Verschlussvorrichtung 14 an das Gegenlager die Solllage des Gegenlagers relativ zur Verschlussvorrichtung 14 erreicht, kommt die Tastspitze 124 des Tastgleiters 120 an dem Gegenlager zur Anlage, der Tastgleiter 120 wird in X-Richtung entgegen der Kraft der Zugfeder 122 so weit verschoben, dass der Ausrücker 126 den Ausrückarm 128 des Sperrhebels 130 betätigt und letzteren um die Achse 131 im Uhrzeigersinn entgegen der Wirkung des Federarms 134 schwenkt, und die Sperrnase 133 des Sperrhebels 130 gelangt außer Eingriff mit Bezug auf die Anlaufkante an der Unterseite des Kulissenkörpers 80. Der Kulissenkörper 80 ist nun weiter nach vorne (also in -X-Richtung) in Richtung auf seine vordere Endlage verschiebbar. Der zweite Federarm 136 der Kombifeder 138 ist nach oben in Z-Richtung vorgespannt und kann entgegen seiner Vorspannung von dem hinteren Arm 40 des Verriegelungshakens 36 nach unten ausgelenkt werden, wenn sich der Verriegelungshaken 36 in seiner Freigabestellung befindet. Dabei wird vom Federarm 136 in seiner nach oben vorgespannten Grundstellung ein elektrischer Mikroschalter 140 betätigt, der gemeinsam mit der Kombifeder 138 an der Lagerplatte 34 festgelegt ist, wobei der Mikroschalter 140 ein entsprechendes Signal "Verriegelungshaken in Verriegelungsstellung" liefert. Dieses Signal wird als Ausgangsgröße in eine die motorische Betätigung der Verschlussvorrichtung 14 steuernde elektronische Steuervorrichtung eingespeist, die ebenfalls die Steuerung der motorischen Betätigung der Öffnungs- und Schließbewegung des Faltdachs 30 übernimmt.

Es kann ferner vorgesehen sein, den Federarm 136 anstelle seiner federnden Vorspannung nach oben formschlüssig mit dem hinteren Arm 40 des Verriegelungshakens 36 zu verbinden, so dass letzterer den Federarm 136 in beide Richtungen, d.h., nach oben und unten, betätigt.

Alternativ zur Wechselwirkung der Tastspitze 124 des Tastgleiters 120 mit dem Gegenlager kann auch eine Wechselwirkung der Tastspitze 124 mit dem Seitenholm 28 vorgesehen sein, wobei dann, wenn der Seitenholm 28 sich in Solllage befindet und er insbesondere mit dem Fahrzeug verriegelt ist, der Tastgleiter 120 beim Ankopplungsvorgang der Verschlussvorrichtung 14 an das Gegenlager vom Seitenholm 28 betätigt und in X-Richtung so weit verschoben wird, dass die Sperrnase 133 des Sperrhebels 130 den Kulissenkörper 80 nicht mehr in seiner Warnposition arretiert. Ist der Seitenholm 28 hingegen vom Fahrzeug abgenommen oder befindet er sich aus einem anderen Grund nicht in seiner Solllage mit Bezug auf die Verschlussvorrichtung 14 in Ankoppelstellung, wird die Tastspitze 124 beim Ankoppelvorgang nicht oder nicht weit genug in X-Richtung betätigt und der Kulissenkörper 80 bei Erreichen seiner Warnposition arretiert, auch wenn sich das Gegenlager in Solllage befindet. Somit wird die Gegenlagererkennungseinrichtung im Prinzip zur Seitenholmerkennung verwendet. Dies hat den weiteren Vorteil, dass bei Ankopplung der Verschlussvorrichtung 14 an das weitere Gegenlager, welches am Viergelenk angebracht ist, der Kulissenkörper 80 nicht weiter als bis in seine Warnposition verschoben werden kann, da sich zwar das am Viergelenk vorgesehene Gegenlager in Solllage befindet, ein Seitenholm aber nicht vorhanden ist. Somit wird verhindert, dass die weiter unten beschriebene Arretierung des Dachspitzengleiters 116 mit Bezug auf die Verschlussvorrichtung 14 gelöst wird, wenn die Verschlussvorrichtung 14 am Gegenlager des Viergelenks angekoppelt wird.

Eine Ausrichtgabel 152 an einem vorderen Ende der Ausrichtplatte 100 dient der Ausrichtung der Verschlussvorrichtung 14 in Y- und Z-Richtung mit Bezug auf den vorderen Führungsschienenabschnitt 26, zu welchem Zweck die Ausrichtgabel 152 in ein komplementär geformtes Ausrichtlager eingreift, welches eine Einheit mit dem schwimmend im Seitenholm 28 gelagerten vorderen Führungsschienenabschnitt 26 bildet. Die am Führungsschienenabschnitt 22 der Verschlussvorrichtung 14 festgelegte Ausrichtleiste 24, die sich in Z-Richtung oberhalb der Ausrichtgabel 152 befindet und in Eingriff mit dem vorderen Führungsschienenabschnitt 26 gebracht werden kann, verhindert eine Verkippung um die X-Achse des vorderen Führungsschienenabschnitts 26 mit Bezug auf den Führungsschienenabschnitt 22. Eine Ausrichtfläche 150 ist an einer Seitenfläche der Ausrichtgabel 152 in der X-Z-Ebene gelegen und an die Stirnfläche des Bolzens 46 des an der B-Säule 20 angebrachten Gegenlagers anlegbar, so dass im Zusammenwirken mit der spiegelbildlichen linken Verschlussvorrichtung und dem linken Bolzen eine in Y-Richtung gesehen symmetrische Ausrichtung der gesamten Dachkassette 12 mit Bezug auf die beiden karosseriefesten Bolzen 46 erfolgt.

An einer in Y-Richtung verlaufenden Abkantung der Ausrichtplatte 100 ist eine Endlagenfeder 146 festgelegt, die zwei Federarme 142 und 144 umfasst, von denen der Federarm 142 von unten in die Kammer 113 eingreift, in der der Dachspitzengleiter 116 aufgenommen ist, welcher mit einer Dachspitze 149 des Faltdachs 30 verbunden ist und die Öffnungs- und Schließbewegung desselben bewirkt. Der zweite Federarm 144 ist ausgelegt, einen elektrischen Mikroschalter 148 mechanisch zu betätigen, wenn sich der Dachspitzengleiter 116 in einer Halteposition befindet, wobei der Mikroschalter 148 das Signal "Dachspitzengleiter in Halteposition" an die elektronische Steuervorrichtung gibt. In dieser Position ist der Dachspitzengleiter 116 vollständig in dem Führungsschienenabschnitt 22 der Verschlussvorrichtung 14 aufgenommen und lässt sich mit Bezug auf den Führungsschienenabschnitt 22 arretieren. Mit dem Dachspitzengleiter 116 sind sämtliche verschiebbaren Teile des Faltdachs 30 in dem Führungsschienenabschnitt 22 gehalten und können mitsamt der Dachkassette 12 von dem karosseriefesten Gegenlager gelöst werden.

Bei geschlossenem Faltdach 30 befinden sich der Dachspitzengleiter 116 und der Mitnahmegleiter 114 in dem vorderen Führungsschienenabschnitt 26 und sind mittels eines Riegelsteins 164 formschlüssig miteinander verbunden, der in Z-Richtung verschiebbar im Dachspitzengleiter 116 aufgenommen ist. Die Dachkassette 12 ist über die Verschlussvorrichtungen 14 an den B-Säulen 20 des Fahrzeugs 10 festgelegt, wobei sich der Verriegelungshaken 36 in Verriegelungsstellung in seiner hinteren Rastposition 54 aufhält. Der Kulissenkörper 80 steht in seiner vorderen Endlage und ist in dieser durch einen in Y-Richtung verschiebbar gelagerten Riegelstein 156, der mittels einer über eine Druckfeder 160 belasteten Kugel 158 in seinen Endlagen einrastbar ist, in einer Aussparung 162 der Lagerplatte 34 gehalten. Während der die Schwenkbewegung des Lagerhebels 58 und damit die Verschiebebewegung des Verriegelungshakens 36 steuernde Steuerstift 68 mit dem Gleitstein 70 am hinteren Ende eines Haltebereichs 204 der Steuerbahn 72 der Schaltkulisse 74 steht, befindet sich der Steuerbolzen 82 des Steuerhebels 84 in einem Haltebereich 206 der Steuerbahn 76 der für die Schwenkbewegung des Verriegelungshakens 36 zuständigen Schaltkulisse 78. Der Haltehebel 89 ist durch Anlage seiner Schrägfläche 95 an dem Haltebolzen 87 soweit im Gegenuhrzeigersinn geschwenkt, dass sein Vorsprung 97 die Abkantung 92 des Steuerhebels 84 untergreift und diesen mit Bezug auf den Verriegelungshaken 36 festlegt. Da die Position des Steuerhebels 84 seinerseits durch seine Aufnahme sowohl im Lagerhebel 58 (durch den Lagerstift 56) als auch im Haltebereich 206 der Schaltkulisse 78 (durch den Steuerbolzen 82) fest vorgegeben ist, ist der Verriegelungshaken 36 letztendlich in seiner Verriegelungsposition blockiert. Damit sich der Kulissenköper 80 in seiner vorderen Endlage befinden kann, muss selbstverständlich wie oben beschrieben das Gegenlager bzw. der Seitenholm 28 in Solllage stehen, der Tastgleiter 120 betätigt und die Sperrnase 133 des Sperrhebels 130 außer Eingriff mit Bezug auf die an der Unterseite des Kulissenkörpers 80 angeordnete Anlaufkante sein.

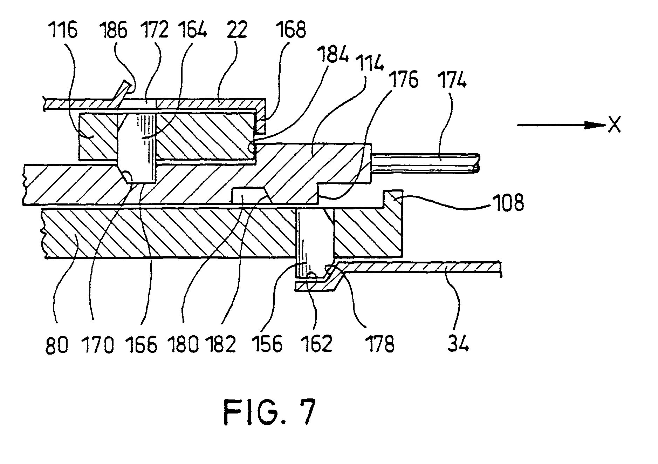

Um die Dachkassette 12 von der B-Säule 20 abzukoppeln, muss zunächst das Faltdach 30 geöffnet werden, indem der Dachspitzengleiter 116 in Öffnungsrichtung 32 nach hinten verschoben wird. Die Verschiebebewegung wird dem Dachspitzengleiter 116 vom Mitnahmegleiter 114 aufgeprägt, der seinerseits mittels an sich bekannter drucksteifer Kabel 174 über einen Elektromotor bewegt wird, der in der Dachkassette 12 aufgenommen ist. Sowohl der Dachspitzengleiter 116 als auch der Mitnahmegleiter 114 gelangen schließlich von dem vorderen Führungsschienenabschnitt 26 in den Führungsschienenabschnitt 22 der Verschlussvorrichtung 14, wobei der Dachspitzengleiter 116, sobald er in seiner Halteposition angelangt ist, an einen Anschlag 168 anstößt, der in dem Führungsschienenabschnitt 22 vorgesehen ist und eine weitere Verschiebung des Dachspitzengleiters 116 nach hinten (in X-Richtung) verhindert (siehe Fig. 7), wobei auch wie oben beschrieben der elektrische Mikroschalter 148 vom Federarm 144 betätigt wird. Der Mitnahmegleiter 114 hat jetzt seine in Fig. 7 wiedergegebene Übergabeposition erreicht. Wird er vom Elektromotor über das drucksteife Kabel 174 weiterhin mit einer Kraft in X-Richtung beaufschlagt, übt eine Schrägfläche 170 in einer den Riegelstein 164 aufnehmenden Aussparung 166 in dem Mitnahmegleiter 114 eine Kraft in Z-Richtung auf den Riegelstein 164 aus, die ausreicht, letzteren in Z-Richtung so weit zu verschieben, dass der Riegelstein 164 außer Eingriff mit Bezug auf die Aussparung 166 in dem Mitnahmegleiter 114 gelangt und mit seinem dem Mitnahmegleiter 114 abgewandten Ende in eine Aussparung 172 in dem Führungsschienenabschnitt 22 geschoben wird. Damit ist der Dachspitzengleiter 116 formschlüssig in dem Führungsschienenabschnitt gehalten, und der Mitnahmegleiter 114 für eine weitere Verschiebung in X-Richtung freigegeben, wobei die dem Dachspitzengleiter 116 zugewandte Seite des Mitnahmegleiters 114 so ausgebildet ist, dass ein Lösen der Formschlussverbindung zwischen dem Dachspitzengleiter 116 und dem Führungsschienenabschnitt 22 durch eine Verschiebung des Riegelsteins 164 im Dachspitzengleiter 116 in -Z-Richtung ausgeschlossen ist. Nach Durchlaufen einer vorbestimmten Wegstrecke kommt der Mitnahmegleiter 114 mittels seiner Koppelfläche 176 an der Anlaufkante 108 des sich in der vorderen Endlage gemäß Fig. 7 befindlichen Kulissenkörpers 80 zur Anlage, wobei gleichzeitig eine komplementär zum Riegelstein 156 geformte Aussparung 180 in der dem Kulissenkörper 80 zugewandten Seite des Mitnahmegleiters 114 so zu liegen kommt, dass bei weiterer Kraftausübung in X-Richtung auf den Mitnahmegleiter 114 dieser den Kulissenkörper 80 über die an der Anlaufkante 108 anliegende Koppelfläche 176 mitnimmt, wobei eine Schrägfläche 178 in der den Riegelstein 156 aufnehmenden Aussparung 162 in der Lagerplatte 34 eine Kraft in Y-Richtung auf den Riegelstein 156 ausübt, die den Riegelstein 156 in dem Kulissenkörper 80 in seine zweite Endlage verschiebt, in der der Riegelstein 156 außer Eingriff mit Bezug zur Aussparung 162 und in Eingriff mit Bezug zur Aussparung 180 steht. Der Riegelstein 156 löst die Formschlussverbindung des Kulissenkörpers 80 mit der Lagerplatte 34 und bildet zur gleichen Zeit eine solche zwischen dem Kulissenkörper 80 und dem Mitnahmegleiter 114, der den Kulissenkörper 80 in Richtung auf dessen hintere Endlage mitnimmt. Dabei ist eine Verschiebung des Riegelsteins 156 in -Y-Richtung aus der Aussparung 180 heraus nicht nur aufgrund der federbelasteten Kugel 158 ausgeschlossen, die den Riegelstein 156 in seiner Endlage hält, sondern auch dadurch, dass die dem Mitnahmegleiter 114 zugewandte Seite der Lagerplatte 34 hinter der Schrägfläche 178 entsprechend nahe an den Kulissenkörper 80 herangeführt ist.

Es sei darauf hingewiesen, dass der Mitnahmegleiter 114 den Kulissenkörper 80 in dessen hintere Endlage in X-Richtung über die Koppelfläche 176 mitnimmt, welche an der Kontaktfläche 108 anliegt. Die Mitnahme des Kulissenkörpers 80 in Richtung auf dessen vordere Endlage (in X-Richtung) erfolgt mittels der Formschlussverbindung zwischen dem Mitnahmegleiter 114 und dem Kulissenkörper 80, die über den Riegelstein 156 bewirkt wird.

Alternativ zur oben beschriebenen Verrastung des Riegelstein 156 in seinen beiden Endlagen kann der Riegelstein 156 auch nur in seiner in Fig. 7 gezeigten Endlage mittels der federbelasteten Kugel 158 verrastet sein.

Bei Verschiebung des Kulissenkörpers 80 in X-Richtung auf seine hintere Endlage hin, gelangt der Gleitstein 70, der auf dem Steuerstift 68 des Lagerhebels 58 aufgenommen ist, zunächst von dem Haltebereich 204 in einen rampenförmig nach unten verlaufenden Verschiebebereich 208 der Steuerbahn 72. Hierbei wird dem Lagerhebel 58 um dessen Achse 60 eine Schwenkbewegung im Uhrzeigersinn aufgezwungen, die über den Lagerstift 56 in eine Verschiebebewegung des Verriegelungshakens 36 umgeformt wird, wobei der Verriegelungshaken 36 von seiner hinteren Rastposition 54 in Verschieberichtung 50 nach vorne in -X-Richtung auf seine vordere Rastposition 52 hin verschoben wird und über seine Gleitfläche 190 auf der Abkantung 188 der Lagerplatte 34 gleitet. Die vordere Rastposition 52 ist erreicht, wenn sich der Gleitstein 70 on der tiefsten Stelle des rampenförmigen Verschiebebereichs 208 der Steuerbahn befindet und in einen vorderen Haltebereich 212 übergeht, in dem er im Wesentlichen horizontal geführt wird, so dass der Lagerhebel 58 keine Schwenkbewegung mehr durchführt.

Etwa bei Erreichen der vorderen Rastposition 52 wird durch weitere Verschiebung des Kulissenkörpers 80 in X-Richtung die Schwenkbewegung des Verriegelungshakens 36 von seiner Verriegelungs- in seine Freigabestellung eingeleitet, indem der Steuerbolzen 82 des Steuerhebels 84 den Haltebereich 206 der Steuerbahn 76 verlässt und auf einen aufwärts gerichteten Bereich einer Schwenknocke 210 trifft, die die Steuerbahn 76 im vorderen Bereich in der Form eines liegenden Y aufteilt. Der Steuerbolzen 82 folgt dem oberen Schenkel des liegenden Y und prägt über die Abkantung 92 dem Verriegelungshaken 36 eine Schwenkbewegung um die Achse des Lagerstifts 56 auf, der auch den Steuerhebel 84 schwenkbar mit dem Lagerhebel 58 verbindet. Sobald der Verriegelungshaken 36 in die Freigabestellung angehoben ist, rastet der Rastbereich 98 des Haltehebels 89 in den Haltebolzen 87 ein und hält den Verriegelungshaken 36 in seiner Freigabestellung. Dabei wird über den Federarm 136 die Betätigung des Mikroschalters 140 aufgehoben und der Bolzen 46 des Gegenlagers kommt aus der Verriegelungsnut 42 des Verriegelungshakens 36 frei, so dass die Dachkassette 12 von der B-Säule 20 abgekoppelt ist und, wie bereits im Zusammenhang mit den Fign. 1 und 2 beschrieben wurde, abgesenkt werden kann.

Der Ankopplungsvorgang der Dachkassette 12 mittels der Verschlussvorrichtung 14 am karosseriefesten Gegenlager verläuft sinngemäß in umgekehrter Reihenfolge, wobei auf folgende Besonderheiten hingewiesen werden soll: Befindet sich der Kulissenkörper 80 in seiner hinteren Endlage, steht der Steuerbolzen 82 vor der Vorderkante der Schwenknocke 210. Wird die Verschlussvorrichtung 14 manuell gegen das Gegenlager gedrückt, stößt zunächst der Bolzen 46 von vorne gegen den in die Aufnahmenut 48 hineinragenden zweiten Arm 94 des Haltehebels 89, wodurch diesem eine Schwenkbewegung gegen den Uhrzeigersinn aufgezwungen wird. Beim Auftreffen des Bolzens 46 auf die Rückwand der Verriegelungsnut 42 übt dieser auf den Verriegelungshaken 36 eine Kraft aus, deren Wirkungslinie unterhalb des Lagerstifts 56 verläuft, so dass dem Verriegelungshaken 36 zusätzlich zu der von der Zugfeder 90 ausgeübten Kraft auch ein Drehmoment im Gegenuhrzeigersinn aufgeprägt wird. Auf diese Weise kommt der Rastbereich 98 des Haltehebels 89 vom Haltebolzen 87 frei, und der Verriegelungshaken 36 kann in seine Verriegelungsstellung schwenken, ohne dass der Steuerbolzen 82 diese Schwenkbewegung behindert, da er außerhalb der Steuerbahn 76 steht. Sobald die Schrägfläche 95 des Haltehebels 89 an dem Haltebolzen anliegt, wird der Verriegelungshaken 36, wie bereits beschrieben, durch die Zugfeder 90 in Richtung auf die Verriegelungsstellung vorgespannt. Bewegt sich der Kulissenkörper 80 weiter in -X-Richtung nach vorne, wird der Steuerbolzen 82 des Steuerhebels 84 durch die Schwenknocke 210 nach unten ausgelenkt und in den unteren Arm des liegenden Y eingeführt. Diese Bewegung wird nicht auf den Verriegelungshaken 36 übertragen, da die Abkantung 92 des Steuerhebels 84 noch nicht von dem Vorsprung 97 des Haltehebels 89 untergriffen wird, sondern vielmehr nach unten aus der Ausnehmung 85 des Verriegelungshakens 36 herauswandern kann. Erst wenn der Verriegelungshaken 36 weiter in Richtung auf seine hintere Rastposition 54 verschoben wird, ist der Haltehebel 89 soweit im Gegenuhrzeigersinn verschwenkt, dass der Steuerhebel 84 mit Bezug zum Verriegelungshaken 36 durch Untergreifen der Unterkante der Abkantung 92 mittels des Vorsprungs 97 des Haltehebels 89 festgelegt ist. Sollten sich das Gegenlager und/oder der Seitenholm 28 in Außersolllage befinden, wird die Tastspitze 124 des Tastgleiters 120 nicht oder nicht weit genug in X-Richtung betätigt und der Kulissenkörper 80 vor Erreichen der vorderen Endlage in der Warnposition angehalten, indem die an seiner Unterseite befindliche Anlaufkante an die Sperrnase 133 des Sperrhebels 130 anstößt. Dabei wird der das drucksteife Kabel 174 betätigende Elektromotor blockiert und schaltet ab. Ist das Gegenlager hingegen in Solllage, kann der Kulissenkörper 80 bis in seine vordere Endlage verschoben werden, in welcher - bei weiterer Beaufschlagung des Mitnahmegleiters 114 mit einer Kraft in -X-Richtung - der Riegelstein 156 von einer Schrägfläche 182 in der Aussparung 180 des Mitnahmegleiters 114 in -Y-Richtung in die Aussparung 162 in der Lagerplatte 34 verschoben wird und gleichzeitig der Mitnahmegleiter 114 vom Kulissenkörper 80 freikommt. Der Riegelstein 156 wird durch die von der Druckfeder 160 belastete Kugel 158 in dieser Stellung gehalten, während der Mitnahmegleiter 114 weiter nach vorne in die Übergabeposition geschoben wird, wo er mittels einer Koppelfläche 184 an dem Dachspitzengleiter 116 zum Anliegen kommt. Dabei wird über das drucksteife Kabel 174 auf den Dachspitzengleiter 116 eine Kraft nach vorne ausgeübt, die ausreicht, über eine Schrägfläche 186 an einer Vorderseite der Aussparung 172 im Führungsschienenabschnitt 22 den Riegelstein 164 des Dachspitzengleiters 116 in -Z-Richtung aus der Aussparung 172 heraus und in die Aussparung 166 des Mitnahmegleiters 114 hinein zu schieben. Dabei wird die Kopplung zwischen dem Dachspitzengleiter 116 und dem Führungsschienenabschnitt 22 aufgehoben und eine Kopplung zwischen dem Dachspitzengleiter 116 und dem Mitnahmegleiter 114 aufgebaut.

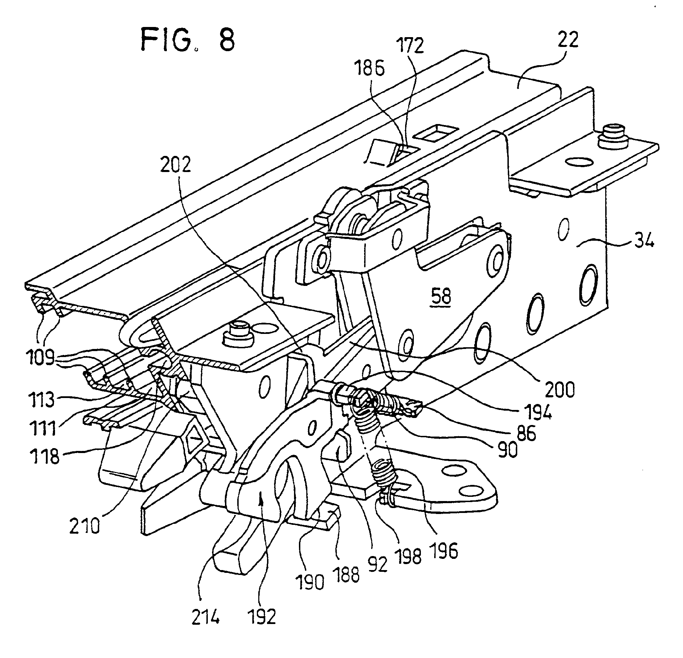

In Fig. 8 ist eine alternative Ausgestaltung einer Verschlussvorrichtung veranschaulicht, weiche sich von der in den Fign. 3 bis 7 wiedergegebenen im wesentlichen nur dadurch unterscheidet, dass auf einen Haltehebel entsprechend dem Haltehebel 89 der ersten Ausführungsform verzichtet wird und ein Verriegelungshaken 192 keinen hinteren Arm entsprechend dem hinteren Arm 40 des Verriegelungshakens 36 aufweist. Die federende Vorspannung des Verriegelungshakens 192 in Richtung auf seine Verriegelungsstellung wird durch eine Zugfeder 196 aufgebracht, die sich zwischen einer Abkantung 194 am Verriegelungshaken 192 und einer Haltenase 198 an der Lagerplatte 34 erstreckt. Ein abgewandelter Steuerhebel 200 weist anstelle des Steuerbolzens 82 des Steuerhebels 84 einen einstückig an dem Steuerhebel 200 angeformten Steuerlappen 202 auf, der mit der Steuerbahn 76 wechselwirkt, um die Schwenkbewegung des Verriegelungshakens 192 zu steuern. Die Abkantung 92 des Steuerhebels 200 liegt, ebenso wie dies beim Steuerhebel 84 der ersten Ausführungsform der Verschlussvorrichtung der Fall ist, im Uhrzeigersinn vorgespannt von unten am Verriegelungshaken 192 an, allerdings wird die Vorspannkraft bei dem zweiten Ausführungsbeispiel gemäß Fig. 8 von der Zugfeder 90 geliefert, die sich, im Unterschied zur ersten Ausführungsform, zwischen der Abkantung 86 am Steuerhebel 200 und der Abkantung 194 am Verriegelungshaken 192 erstreckt.

Wenn der Kulissenkörper 80 sich seiner hinteren Endlage nähert, gelangt der Steuerlappen 202 - ebenso wie der Steuerbolzen 82 der ersten Ausführungsform - vor die Vorderkante der Schwenknocke 210. Da der Verriegelungshaken 192 in seiner Freigabestellung jedoch durch keinen Haltehebel gehalten wird, schwenkt er nun frei in die Verriegelungsstellung. Bei Ankopplung der Verschlussvorrichtung gemäß Fig. 8 an dem karosseriefesten Gegenlager muss daher der sich in Verriegelungsstellung in seiner vorderen Rastposition befindliche Verriegelungshaken zunächst mittels des Bolzens 46 in die Freigabestellung angehoben werden, wozu der Verriegelungshaken 192 an seiner Vorderseite eine Schrägfläche 214 aufweist. Eine Blockierung des Verriegelungshakens 192 in Verriegelungsstellung ist im Gegensatz zur ersten Ausführungsform der Verschlussvorrichtung genauso wenig vorgesehen wie der Mikroschalter 140 zur Abfrage der Schwenkstellung des Verriegelungshakens 192.

### Bezugszeichenliste

- 10: Fahrzeug
- 12: Dachkassette
- 14: Verschlussvorrichtung
- 16: Seitenteil
- 18: Heckscheibe
- 20: B-Säule
- 22: Führungsschienenabschnitt
- 24: Ausrichtleiste
- 26: vorderer Führungsschienenabschitt
- 28: Seitenholm
- 30: Faltdach
- 32: Öffnungs- bzw. Schließrichtung
- 34: Lagerplatte
- 36: Verriegelungshaken
- 38: vorderer Arm (von 36)
- 40: hinterer Arm (von 36)
- 42: Verrieglungsnut
- 44: Schwenkrichtung
- 46: Bolzen
- 48: Aufnahmenut
- 50: Verschieberichtung
- 52: vordere Rastposition
- 54: hintere Rastposition
- 56: Lagerstift
- 58: Lagerhebel
- 59: Lagerbügel
- 60: Achse (von 58)
- 62: Buchse (von 58)
- 64, 66: Arm (von 58)
- 68: Steuerstift
- 70: Gleitstein
- 72: Steuerbahn
- 74: Schaltkulisse
- 76: Steuerbahn
- 78: Schaltkulisse
- 80: Kulissenkörper
- 82: Steuerbolzen
- 84: Steuerhebel
- 85: Ausnehmung (von 36)
- 86: Abkantung (von 84 bzw. 200)
- 87: Haltebolzen
- 88: Vorsprung (von 89)
- 89: Haltehebel
- 90: Zugfeder
- 91: Ansatzbolzen
- 92: Abkantung (von 84 bzw. 200)
- 93: erster Arm (von 89)
- 94: zweiter Arm (von 89)
- 95: Schrägfläche
- 97: Vorsprung
- 98: Rastbereich
- 99: Schraube
- 100: Ausrichtplatte
- 101, 102: Gleitbahn
- 104: Trennwand
- 106: Durchbruch
- 108: Anlaufkante
- 109: Steg
- 110, 112: Schenkel
- 111, 113: Kammer
- 114: Mitnahmegleiter
- 116: Dachspitzengleiter
- 118: Kabelkanal
- 119: Oberseite
- 120: Tastgleiter
- 122: Zugfeder
- 124: Tastspitze
- 125: Vorderkante
- 126: Ausrücker
- 128: Ausrückarm
- 130: Sperrhebel
- 131: Achse
- 132: Arm (von 130)
- 133: Sperrnase
- 134, 136: Federarm
- 138: Kombifeder
- 140: Mikroschalter
- 142, 144: Federarm
- 146: Enlagenfeder
- 148: Mikroschalter
- 149: Dachsitze
- 150: Ausrichtfläche
- 152: Ausrichtgabel
- 156: Riegelstein
- 158: Kugel
- 160: Druckfeder
- 162: Aussparung
- 164: Riegelstein
- 166: Aussparung
- 168: Anschlag
- 170: Schrägfläche
- 172: Aussparung
- 174: drucksteifes Kabel
- 176: Koppelfläche
- 178: Schrägfläche
- 180: Aussparung
- 182: Schrägfläche
- 184: Koppelfläche
- 186: Schrägfläche
- 188: Abkantung
- 190: Gleitfläche
- 192: Verriegelungshaken
- 194: Abkantung
- 196: Zugfeder
- 198: Haltenase
- 200: Steuerhebel
- 202: Steuerlappen
- 204, 206: Haltebereich
- 208: Verschiebebereich
- 210: Schwenknocke
- 212: Haltebereich
- 214: Schrägfläche

## Patentansprüche

1. Verschlussvorrichtung zur lösbaren Festlegung eines Dachteils (12) eines Fahrzeugs (10) an einem karosseriefesten Gegenlager, wobei die Verschlussvorrichtung eine Lagerplatte (34) mit einem Aufnahmeorgan (48) für das Gegenlager (46) umfasst, welches über einen mit Bezug auf die Lagerplatte (34) schwenkbaren Verriegelungshaken (36, 192) in dem Aufnahmeorgan (48) verriegel- und mit Bezug auf dieses verschiebbar ist, **dadurch gekennzeichnet, dass** der Verriegelungshaken (36, 192) im wesentlichen in Verschieberichtung (50) des Gegenlagers (46) von einer vorderen Rastposition (52) in eine hintere Rastposition (54) verschiebbar sowie im wesentlichen senkrecht hierzu von einer Verriegelungs- in eine Freigabestellung schwenkbar ist, wodurch eine Funktionstrennung zwischen der Verriegelungsbewegung als Schwenkbewegung und der Verschiebebewegung geschaffen wird und wobei das Gegenlager (46) auch in der vorderen Rastposition (52) sicher in dem Aufnahmeorgan gehalten wird.

2. Verschlussvorrichtung nach Anspruch 1, **dadurch gekennzeichnet, dass** der Verriegelungshaken (36, 192) in Richtung auf die Verriegelungsstellung federnd vorgespannt ist.

3. Verschlussvorrichtung nach Anspruch 1 oder 2, **dadurch gekennzeichnet, dass** der Verriegelungshaken (36, 192) mittels eines von einer Steuerbahn (76) einer Schaltkulisse (78) betätigbaren Steuerhebels (84, 200) von der Verriegelungsstellung in die Freigabestellung schwenkbar ist.

4. Verschlussvorrichtung nach Anspruch 3, **dadurch gekennzeichnet, dass** der Steuerhebel (84, 200) mit Bezug auf den Verriegelungshaken (36, 192) bewegbar ausgebildet ist, wobei der Steuerhebel (84, 200) in Richtung auf die Verriegelungsstellung entgegen einer Federkraft außer Eingriff mit Bezug auf den Verriegelungshaken (36, 192) bringbar ist.

5. Verschlussvorrichtung nach einem der vorhergehenden Ansprüche, **dadurch gekennzeichnet, dass** der Verriegelungshaken (36, 192) mittels eines mit einer Steuerbahn (72) einer Schaltkulisse (74) in Eingriff stehenden Lagerhebels (58) zwischen der vorderen Rastposition (52) und der hinteren Rastposition (54) verschiebbar ist.

6. Verschlussvorrichtung nach Anspruch 5, **dadurch gekennzeichnet, dass** der Lagerhebel (58) wenigstens zwei Arme (64, 66) umfasst, von denen der eine Arm (64) schwenkbar mit der Lagerplatte (34) verbunden ist und der andere Arm (66) mit der Steuerbahn (72) der Schaltkulisse (74) in Eingriff steht, wobei der Verriegelungshaken (36, 192) schwenkbar mit dem Lagerhebel (58) gekoppelt ist.

7. Verschlussvorrichtung nach einem der vorhergehenden Ansprüche, **dadurch gekennzeichnet, dass** der Verriegelungshaken (36) in seiner Freigabestellung mittels eines Haltehebels (89) arretierbar ist.

8. Verschlussvorrichtung nach Anspruch 7, **dadurch gekennzeichnet, dass** der Haltehebel (89) schwenkbar mit dem Verriegelungshaken (36) gekoppelt ist und wenigstens zwei Arme (93, 94) aufweist, von denen ein erster Arm (93) mit einer an der Lagerplatte (34) festgelegten oder einstückig mit dieser ausgebildeten Fangvorrichtung (87) in der Freigabestellung des Verriegelungshakens (36) formschlüssig in Eingriff bringbar ist, wobei der Haltehebel (89) in Richtung auf die Fangvorrichtung (87) federnd vorgespannt ist, und ein zweiter Arm (94) in das Aufnahmeorgan (48) eingreift und mittels des Gegenlagers entgegen der Federvorspannung schwenkbar ist.

9. Verschlussvorrichtung nach Anspruch 8, **dadurch gekennzeichnet, dass** der erste Arm (93) des Haltehebels (89) eine Schrägfläche (95) aufweist, die bei außer Eingriff mit Bezug auf die Fangvorrichtung (87) befindlichem Haltehebel (89) federnd vorgespannt an eine Gegenfläche der Fangvorrichtung (87) anlegbar und mit Bezug auf diese verschiebbar ist, wobei die Schrägfläche (95) dergestalt mit der Gegenfläche zusammenwirkt, dass die Federvorspannung die Vorspannung des Verriegelungshakens (36) in Richtung auf seine Verriegelungsstellung bewirkt.

10. Verschlussvorrichtung nach einem der vorhergehenden Ansprüche, **dadurch gekennzeichnet, dass** wenigstens in der hinteren Rastposition (54) des Verriegelungshakens (36) dessen Schwenkbewegung in der Verriegelungsstellung blockierbar ist.

11. Verschlussvorrichtung nach Anspruch 10 rückbezogen auf Anspruch 8 oder 9, **dadurch gekennzeichnet, dass** zur Blockierung der Schwenkbewegung des Verriegelungshakens (36) ein Arm (94) des Haltehebels (89) mit dem Steuerhebel (84) in Eingriff bringbar ist und diesen mit Bezug auf den Verrieglungshaken (36) festlegt.

12. Verschlussvorrichtung nach einem der vorhergehenden Ansprüche, **dadurch gekennzeichnet, dass** der Verriegelungshaken (36) abhängig von seiner Freigabestellung oder Verriegelungsstellung einen elektrischen Schalter (140) betätigt.

13. Verschlussvorrichtung nach einem der Ansprüche 5 bis 12, **dadurch gekennzeichnet, dass** die die Schwenk- und die Verschiebebewegung des Verriegelungshakens (36, 192) steuernden Schaltkulissen (74, 78) in einem gemeinsamen Kulissenkörper (80) integriert sind.

14. Verschlussvorrichtung nach Anspruch 13, **dadurch gekennzeichnet, dass** der Kulissenkörper (80) mit Bezug auf die Lagerplatte (34) zwischen einer hinteren und einer vorderen Endlage verschiebbar ist, wobei die Steuerbahnen (72, 76) dergestalt ausgebildet sind, dass sich der Verriegelungshaken (36, 192) in der hinteren Endlage des Kulissenkörpers (80) in seiner vorderen Rastposition (52) befindet und zwischen seiner Verriegelungs- und Freigabestellung schwenkbar ist, und der Verriegelungshaken (36, 192) in der vorderen Endlage des Kulissenkörpers (80) seine hintere Rastposition (54) in Verriegelungsstellung einnimmt.

15. Verschlussvorrichtung nach Anspruch 13 oder 14, **gekennzeichnet durch** eine Gegenlagererkennungseinrichtung, die dergestalt ausgebildet ist, dass bei Außersolllage des Gegenlagers eine Verschiebbewegung des Kulissenkörpers (80) nur zwischen der hinteren Endlage und einer hinter der vorderen Endlage angeordneten Warnposition möglich ist.

16. Verschlussvorrichtung nach Anspruch 15, **dadurch gekennzeichnet, dass** die Gegenlagererkennungseinrichtung einen schwenkbar mit der Lagerplatte (34) gekoppelten Sperrhebel (130) umfasst, der bei Erreichen der Warnposition des Kulissenkörpers (80) an einer Anlaufkante desselben federnd vorgespannt anliegt, sofern das Gegenlager in Außersolllage steht, und der außer Eingriff mit Bezug auf die Anlaufkante steht, sofern sich das Gegenlager in Solllage befindet.

17. Verschlussvorrichtung nach einem der vorhergehenden Ansprüche, **gekennzeichnet durch** wenigstens ein Ausrichtorgan (150, 152), welches ausgelegt ist, die Verschlussvorrichtung (14) mit Bezug auf das Gegenlager im wesentlichen senkrecht mit Bezug auf die Verschieberichtung des Gegenlagers relativ zum Aufnahmeorgan (48) der Verschlussvorrichtung (14) auszurichten.

18. Verschlussvorrichtung nach einem der vorhergehenden Ansprüche 13 bis 17, **dadurch gekennzeichnet, dass** an der Lagerplatte (34) ein Führungsschienenabschnitt (22) festgelegt ist, der einen motorisch bewegbaren Mitnahmegleiter (114) verschiebbar aufnimmt, der mit dem Kulissenkörper (80) in Eingriff bringbar ist und dessen Verschiebebewegung bewirkt.

19. Verschlussvorrichtung nach Anspruch 18, **dadurch gekennzeichnet, dass** der Führungsschienenabschnitt (22) bei Festlegung der Verschlussvorrichtung (14) an dem Gegenlager an einen vorderen Führungsschienenabschitt (26) anlegbar ist, der in einem Seitenholm (28) des Fahrzeugs (10) aufgenommen ist, wobei der Führungsschienenabschnitt (22) und der vordere Führungsschienenabschnitt (26) eine Führungsschiene eines Faltdachs (30) oder Lamellendachs bilden.

20. Verschlussvorrichtung nach Anspruch 19, **dadurch gekennzeichnet, dass** der Führungsschienenabschnitt (22) ein Ausrichtorgan (24) aufnimmt, das mit dem vorderen Führungsschienenabschnitt (26) in Eingriff bringbar ist.

21. Verschlussvorrichtung nach Anspruch 19 oder 20, **gekennzeichnet durch** einen in dem Kulissenkörper (80) verschiebbar aufgenommenen Riegelstein (156), der zwischen der hinteren Endlage und der vorderen Endlage des Kulissenkörpers (80) letzteren formschlüssig mit dem Mitnahmegleiter (114) verbindet, wobei der Riegelstein (156) in der vorderen Endlage des Kulissenkörpers (80) in Eingriff mit der Lagerplatte (34) oder dem Führungsschienenabschnitt (22) und außer Eingriff mit Bezug auf den Mitnahmegleiter (114) bringbar ist, wobei letzterer weiter nach vorne in eine Übergabeposition verschiebbar ist.

22. Verschlussvorrichtung nach Anspruch 21, **dadurch gekennzeichnet, dass** der Führungsschienenabschnitt (22) ausgelegt ist, einen Dachspitzengleiter (116) verschiebbar aufzunehmen, der mit einem vorderen Ende des Faltdachs (30) oder Lamellendachs verbunden ist und dessen Öffnungs- und Schließbewegung bewirkt, wobei der Dachspitzengleiter (116) einen Riegelstein (164) verschiebbar aufnimmt, der in Eingriff mit der Lagerplatte (34) oder dem Führungsschienenabschnitt (22) steht und den Dachspitzengleiter (116) in einer Halteposition hält, sofern sich der Mitnahmegleiter (114) hinter seiner Übergabeposition befindet, und der in der Übergabeposition des Mitnahmegleiters (114) formschlüssig mit diesem verbindbar und außer Eingriff mit Bezug auf die Lagerplatte (34) oder den Führungsschienenabschnitt (22) bringbar ist.

23. Verschlussvorrichtung nach Anspruch 22, **dadurch gekennzeichnet, dass** der Dachspitzengleiter (116) in seiner Halteposition einen elektrischen Schalter (148) betätigt.

24. Verschlussvorrichtung nach einem der Ansprüche 19 bis 23, **gekennzeichnet durch** lösbar mit dem Fahrzeug (10) verbundene Seitenholme (28).

25. Verschlussvorrichtung nach einem der Ansprüche 19 bis 24, **gekennzeichnet durch** eine Gegenlagererkennungseinrichtung, die dergestalt mit dem Seitenholm (28) wechselwirkt, dass bei nicht in Solllage befindlichen oder nicht vorhandenem Seitenholm (28) der Verriegelungshaken (36) vor Erreichen seiner hinteren Rastposition blockiert wird und der Verriegelungshaken (36) nur zwischen seiner vorderen Rastposition und seiner blockierten Position verschiebbar ist.

## Claims

1. Locking device for the releasable fixing of a roof part (12) of a vehicle (10) to a counterpart fixed to the bodywork, the locking device comprising a bearing plate (34) having a holding element (48) for the counterpart (46), which can be locked in the holding element (48) via a locking hook (36, 192) that can be pivoted in relation to the bearing plate (34) and can be displaced in relation to the said holding element (48), **characterized in that** the locking hook (36, 192) can be displaced substantially in the displacement direction (50) of the counterpart (46) from a front latching position (52) into a rear latching position (54) and can be pivoted substantially at right angles thereto from a locking position into a release position, which creates functional separation between the locking movement as a pivoting movement and the displacement movement, and the counterpart (46) also being held securely in the holding element in the front latching position (52).

2. Locking device according to Claim 1, **characterized in that** the locking hook (36, 192) is spring-prestressed in the direction of the locking position.

3. Locking device according to Claim 1 or 2, **characterized in that** the locking hook (36, 192) can be pivoted from the locking position into the release position by means of a control lever (84, 200) that can be actuated by a control track (76) of a slotted control guide (78).

4. Locking device according to Claim 3, **characterized in that** the control lever (84, 200) can be moved in relation to the locking hook (36, 192), it being possible for the control lever (84, 200) to be moved in the direction of the locking position, counter to a spring force, out of engagement in relation to the locking hook (36, 192).

5. Locking device according to one of the preceding claims, **characterized in that** the locking hook (36, 192) can be displaced between the front latching position (52) and the rear latching position (54) by means of a bearing lever (58) that is in engagement with a control track (72) of a slotted control guide (74).

6. Locking device according to Claim 5, **characterized in that** the bearing lever (58) comprises at least two arms (64, 66), of which one arm (64) is pivotably connected to the bearing plate (34) and the other arm (66) is in engagement with the control track (72) of the slotted control guide (74), the locking hook (36, 192) being pivotably coupled to the bearing lever (58).

7. Locking device according to one of the preceding claims, **characterized in that** the locking hook (36) can be locked in its release position by means of a retaining lever (89).

8. Locking device according to Claim 7, **characterized in that** the retaining lever (89) is pivotably coupled to the locking hook (36) and has at least two arms (93, 94), of which, in the release position of the locking hook (36), a first arm (93) can be brought into form-fitting engagement with a catching device (87) fixed to the bearing plate (34) or formed in one piece with the latter, the retaining lever (89) being spring-prestressed in the direction of the catching device (87), and a second arm (94) engaging in the holding element (48) and being pivotable counter to the spring prestress by means of the counterpart.

9. Locking device according to Claim 8, **characterized in that** the first arm (93) of the retaining lever (89) has an inclined surface (95) which, when the retaining lever (89) is out of engagement in relation to the catching device (87), can be placed under spring prestress on a mating surface of the catching device (87) and can be displaced in relation to the latter, the inclined surface (95) interacting with the mating surface in such a way that the spring prestress effects the prestressing of the locking hook (36) in the direction of its locking position.

10. Locking device according to one of the preceding claims, **characterized in that**, at least in the rear latching position (54) of the locking hook (36), its pivoting movement in the locking position can be blocked.

11. Locking device according to Claim 10, referring back to Claim 8 or 9, **characterized in that**, in order to block the pivoting movement of the locking hook (36), an arm (94) of the retaining lever (89) can be brought into engagement with the control lever (84) and fixes the latter in relation to the locking hook (36).

12. Locking device according to one of the preceding claims, **characterized in that** the locking hook (36) actuates an electric switch (140) as a function of its release position or locking position.

13. Locking device according to one of Claims 5 to 12, **characterized in that** the slotted control guides (74, 78) controlling the pivoting and displacement movement of the locking hook (36, 192) are integrated into a common slotted guide body.

14. Locking device according to Claim 13, **characterized in that** the slotted guide body (80) can be displaced in relation to the bearing plate (34) between a rear and a front end position, the control tracks (72, 76) being constructed in such a way that, in the rear end position of the slotted guide body (80), the locking hook (36, 192) is located in its front latching position (52) and can be pivoted between its locking and release position, and, in the front end position of the slotted guide body (80), the locking hook (36, 192) assumes its rear latching position (54) in the locking position.

15. Locking device according to Claim 13 or 14, **characterized by** a counterpart detection device, which is constructed in such a way that, when the counterpart is out of the intended position, a displacement movement of the slotted guide body (80) is possible only between the rear end position and a warning position arranged behind the front end position.

16. Locking device according to Claim 15, **characterized in that** the counterpart detection device comprises a blocking lever (130) which is pivotably coupled to the bearing plate (34) and which, when it reaches the warning position of the slotted guide body (80), bears under spring prestress on a run-on edge of the same if the counterpart is out of the intended position, and which is out of engagement in relation to the run-on edge if the counterpart is in the intended position.

17. Locking device according to one of the preceding claims, **characterized by** at least one alignment element (150, 152) which is designed to align the locking device (14) in relation to the counterpart substantially at right angles in relation to the displacement direction of the counterpart relative to the holding element (48) of the locking device (14).

18. Locking device according to one of the preceding Claims 13 to 17, **characterized in that** a guide rail section (22) is fixed to the bearing plate (34) and accommodates a drive slider (114) which can be driven by a motor such that it can be displaced, can be brought into engagement with the slotted guide body (80) and effects the displacement movement of the latter.

19. Locking device according to Claim 18, **characterized in that**, when the locking device (14) is fixed to the counterpart, the guide rail section (22) can be placed on a front guide rail section (26) which is accommodated in a side member (28) of the vehicle (10), the guide rail section (22) and the front guide rail section (26) forming a guide rail of a folding roof (30) or louvred roof.

20. Locking device according to Claim 19, **characterized in that** the guide rail section (22) accommodates an alignment element (24) which can be brought into engagement with the front guide rail section (26).

21. Locking device according to Claim 19 or 20, **characterized by** a bolt block (156) which is accommodated in the slotted guide body (80) such that it can be displaced and, between the rear end position and the front end position of the slotted guide body (80), connects the latter to the drive slider (114) with a form fit, it being possible for the bolt block (156) to be brought into engagement with the bearing plate (34) or the guide rail section (22) and out of engagement in relation to the drive slider (114) in the front end position of the slotted guide body (80), it being possible for the said drive slider (114) to be displaced further forwards into a transfer position.

22. Locking device according to Claim 21, **characterized in that** the guide rail section (22) is designed to accommodate a roof peak slider (116) such that it can be displaced, which is connected to a front end of the folding roof (13) or louvred roof and effects its opening and closing movement, the roof peak slider (116) accommodating a bolt block (164) such that it can be displaced, which is in engagement with the bearing plate (34) or the guide rail section (22) and holds the roof peak slider (116) in a holding position if the drive slider (114) is located behind its transfer position and which, in the transfer position of the drive slider (114), can be connected to the latter with a form fit and can be brought out of engagement in relation to the bearing plate (34) or the guide rail section (22).

23. Locking device according to Claim 22, **characterized in that** the roof peak slider (116) actuates an electric switch (148) when in its holding position.

24. Locking device according to one of Claims 19 to 23, **characterized by** side members (28) detachably connected to the vehicle (10).

25. Locking device according to one of Claims 19 to 24, **characterized by** a counterpart detection device, which interacts with the side member (28) in such a way that when the side member (28) is not in the intended position or is absent, the locking hook (36) is blocked before reaching its rear latching position, and the locking hook (36) can be displaced only between its front latching position and its blocked position.

## Revendications

1. Dispositif de fermeture pour le blocage libérable d'une partie de toit (12) d'un véhicule (10) sur une contre-butée faisant corps avec la carrosserie, ledit dispositif de fermeture englobant une platine de montage (34) munie d'un organe (48) de réception de la contre-butée (46) qui peut être verrouillée dans ledit organe de réception (48), par l'intermédiaire d'un crochet de verrouillage (36, 192) pouvant pivoter vis-à-vis de ladite platine de montage (34), et qui peut coulisser par rapport audit organe, **caractérisé par le fait que** le crochet de verrouillage (36, 192) peut sensiblement coulisser, dans la direction de coulissement (50) de la contre-butée (46), d'une position crantée antérieure (52) à une position crantée postérieure (54), et peut également pivoter, pour l'essentiel perpendiculairement à la direction précitée, d'une position de verrouillage à une position de dégagement, ce qui instaure une séparation fonctionnelle entre le mouvement coulissant et le mouvement de verrouillage revêtant la forme d'un mouvement pivotant, la contre-butée (46) étant retenue de manière sûre, dans l'organe de réception, également dans la position crantée antérieure (52).

2. Dispositif de fermeture selon la revendication 1, **caractérisé par le fait que** le crochet de verrouillage (36, 192) est précontraint élastiquement en direction de la position de verrouillage.

3. Dispositif de fermeture selon la revendication 1 ou 2, **caractérisé par le fait que** le crochet de verrouillage (36, 192) peut pivoter, de la position de verrouillage à la position de dégagement, au moyen d'un levier de commande (84, 200) pouvant être actionné au moyen d'une piste de commande (76) d'une coulisse sélectrice (78).

4. Dispositif de fermeture selon la revendication 3, **caractérisé par le fait que** le levier de commande (84, 200) est conçu avec mobilité vis-à-vis du crochet de verrouillage (36, 192), ledit levier de commande (84, 200) pouvant être mis hors prise par rapport audit crochet de verrouillage (36, 192), en direction de la position de verrouillage, en s'opposant à une force élastique.

5. Dispositif de fermeture selon l'une des revendications précédentes, **caractérisé par le fait que** le crochet de verrouillage (36, 192) peut coulisser, entre la position crantée antérieure (52) et la position crantée postérieure (54), au moyen d'un levier de montage (58) en prise avec une piste de commande (72) d'une coulisse sélectrice (74).

6. Dispositif de fermeture selon la revendication 5, **caractérisé par le fait que** le levier de montage (58) comprend au moins deux bras (64, 66) dont l'un (64) est relié de manière pivotante à la platine de montage (34), l'autre bras (66) étant en prise avec la piste de commande (72) de la coulisse sélectrice (74), le crochet de verrouillage (36, 192) étant accouplé audit levier de montage (58) avec faculté de pivotement.

7. Dispositif de fermeture selon l'une des revendications précédentes, **caractérisé par le fait que** le crochet de verrouillage (36) peut être arrêté, dans sa position de dégagement, au moyen d'un levier de retenue (89).

8. Dispositif de fermeture selon la revendication 7, **caractérisé par le fait que** le levier de retenue (89) est accouplé au crochet de verrouillage (36) avec faculté de pivotement, et comprend au moins deux bras (93, 94) parmi lesquels un premier bras (93) peut être mis en prise par concordance de formes, dans la position de dégagement dudit crochet de verrouillage (36), avec un dispositif d'arrêt (87) assujetti à la platine de montage (34) ou faisant corps avec cette dernière, ledit levier de retenue (89) étant précontraint élastiquement en direction dudit dispositif d'arrêt (87) ; et un second bras (94) pénètre dans l'organe de réception (48) et peut pivoter, au moyen de la contre-butée, en opposition à la précontrainte élastique.

9. Dispositif de fermeture selon la revendication 8, **caractérisé par le fait que** le premier bras (93) du levier de retenue (89) offre une surface inclinée (95) qui, lorsque ledit levier de retenue (89) n'est pas en prise avec le dispositif d'arrêt (87), peut être plaquée avec précontrainte élastique contre une surface complémentaire dudit dispositif d'arrêt (87), et peut coulisser vis-à-vis de ladite surface, ladite surface inclinée (95) coopérant, avec la surface complémentaire, de façon telle que la précontrainte élastique provoque la précontrainte du crochet de verrouillage (36) en direction de sa position de verrouillage.

10. Dispositif de fermeture selon l'une des revendications précédentes, **caractérisé par le fait que** le mouvement pivotant du crochet de verrouillage (36), dans la position de verrouillage, peut être bloqué au moins lorsque ledit crochet occupe la position crantée postérieure (54).

11. Dispositif de fermeture selon la revendication 10 rapportée à la revendication 8 ou 9, **caractérisé par le fait que**, en vue de bloquer le mouvement pivotant du crochet de verrouillage (36), un bras (94) du levier de retenue (89) peut être mis en prise avec le levier de commande (84), et consigne celui-ci à demeure vis-à-vis dudit crochet de verrouillage (36).

12. Dispositif de fermeture selon l'une des revendications précédentes, **caractérisé par le fait que** le crochet de verrouillage (36) actionne un interrupteur électrique (140) en fonction de sa position de dégagement ou de verrouillage.

13. Dispositif de fermeture selon l'une des revendications 5 à 12, **caractérisé par le fait que** les coulisses sélectrices (74, 78), pilotant les mouvements pivotant et coulissant du crochet de verrouillage (36, 192), sont intégrées dans un corps de coulisse (80) commun.

14. Dispositif de fermeture selon la revendication 13, **caractérisé par le fait que** le corps de coulisse (80) est mobile entre des positions extrêmes postérieure et antérieure, vis-à-vis de la platine de montage (34), les pistes de commande (72, 76) étant conçues de façon telle que, dans la position extrême postérieure dudit corps de coulisse (80), le crochet de verrouillage (36, 192) occupe sa position crantée antérieure (52), et puisse pivoter entre ses positions de verrouillage et de dégagement ; et que, dans la position extrême antérieure dudit corps de coulisse (80), ledit crochet de verrouillage (36, 192) prenne sa position crantée postérieure (54) en position de verrouillage.

15. Dispositif de fermeture selon la revendication 13 ou 14, **caractérisé par** un système de repérage de la contre-butée, réalisé de façon telle que, lorsque ladite contre-butée se trouve en dehors de la position de consigne, un mouvement coulissant du corps de coulisse (80) soit possible uniquement entre la position extrême postérieure, et un emplacement d'alerte situé derrière la position extrême antérieure.

16. Dispositif de fermeture selon la revendication 15, **caractérisé par le fait que** le système de repérage de la contre-butée englobe un levier de blocage (130) qui est accouplé à la platine de montage (34) avec faculté de coulissement ; qui, lorsqu'est atteint l'emplacement d'alerte du corps de coulisse (80), porte contre un bord de contact dudit cops, avec précontrainte élastique, dans la mesure où la contre-butée se trouve en dehors de la position de consigne ; et qui n'est pas en prise, avec ledit bord de contact, dans la mesure où ladite contre-butée se trouve en position de consigne.

17. Dispositif de fermeture selon l'une des revendications précédentes, **caractérisé par** au moins un organe d'orientation (150, 152) conçu pour orienter ledit dispositif de fermeture (14), vis-à-vis de la contre-butée, pour l'essentiel perpendiculairement à la direction du coulissement de ladite contre-butée par rapport à l'organe de réception (48) dudit dispositif de fermeture (14).

18. Dispositif de fermeture selon l'une des revendications précédentes 13 à 17, **caractérisé par le fait qu'**un tronçon de glissière de guidage (22) assujetti à la platine de montage (34) reçoit, de manière coulissante, un coulisseau d'entraînement (114) à mobilité motorisée qui peut être mis en prise avec le corps de coulisse (80), et provoque le mouvement coulissant de ce dernier.

19. Dispositif de fermeture selon la revendication 18, **caractérisé par le fait que**, lorsque ledit dispositif de fermeture (14) est consigné à demeure sur la contre-butée, le tronçon de glissière de guidage (22) peut venir s'appliquer contre un tronçon antérieur de glissière de guidage (26) qui est logé dans un longeron latéral (28) du véhicule (10), ledit tronçon de glissière de guidage (22) et ledit tronçon antérieur de glissière de guidage (26) matérialisant une glissière de guidage d'un toit repliable (30) ou d'un toit à lamelles.

20. Dispositif de fermeture selon la revendication 19, **caractérisé par le fait que** le tronçon (22) de la glissière de guidage renferme un organe d'orientation (24) pouvant être mis en prise avec le tronçon antérieur (26) de ladite glissière de guidage.

21. Dispositif de fermeture selon la revendication 19 ou 20, **caractérisé par** un tenon de verrouillage (156) qui est logé à coulissement dans le corps de coulisse (80) et relie ce dernier au coulisseau d'entraînement (114), par concordance de formes, entre la position extrême postérieure et la position extrême antérieure dudit corps de coulisse (80), sachant que, dans la position extrême antérieure dudit corps de coulisse (80), ledit tenon de verrouillage (156) peut être mis en prise avec la platine de montage (34) ou avec le tronçon (22) de la glissière de guidage, et hors prise vis-à-vis dudit coulisseau d'entraînement (114), lequel peut poursuivre son coulissement, vers l'avant, jusqu'à une position de transfert.

22. Dispositif de fermeture selon la revendication 21, **caractérisé par le fait que** le tronçon (22) de la glissière de guidage est conçu pour recevoir, avec faculté de coulissement, un coulisseau frontal (116) de pavillon relié à une extrémité antérieure du toit repliable (30) ou du toit à lamelles, et provoquant les mouvements d'ouverture et de fermeture de celui-ci, ledit coulisseau frontal (116) du pavillon logeant, de manière coulissante, un tenon de verrouillage (164) qui est en prise avec la platine de montage (34) ou avec le tronçon (22) de la glissière de guidage ; qui maintient ledit coulisseau frontal (116) du pavillon dans une position de retenue dans la mesure où le coulisseau d'entraînement (114) se trouve derrière sa position de transfert ; et qui, dans la position de transfert dudit coulisseau d'entraînement (114), peut être relié à ce dernier par concordance de formes et peut être mis hors prise vis-à-vis de ladite platine de montage (34), ou dudit tronçon (22) de la glissière de guidage.

23. Dispositif de fermeture selon la revendication 22, **caractérisé par le fait que** le coulisseau frontal (116) du pavillon actionne un interrupteur électrique (148) dans sa position de retenue.

24. Dispositif de fermeture selon l'une des revendications 19 à 23, **caractérisé par** des longerons latéraux (28) reliés amoviblement au véhicule (10).

25. Dispositif de fermeture selon l'une des revendications 19 à 24, **caractérisé par** un système de repérage de la contre-butée, en interaction avec le longeron latéral (28) de façon telle que, en l'absence dudit longeron latéral (28) ou lorsque ce dernier n'occupe pas la position de consigne, le crochet de verrouillage (36) soit bloqué avant d'atteindre sa position crantée postérieure, et ledit crochet de verrouillage (36) ne puisse coulisser qu'entre sa position crantée antérieure et sa position bloquée.
